# EUROPÄISCHE PATENTSCHRIFT

(11) **EP 1 100 642 B1**
(45) Veröffentlichungstag und Bekanntmachung des Hinweises auf die Patenterteilung: **12.02.2003**
(21) Anmeldenummer: 99938313.6
(22) Anmeldetag: 21.07.1999
(51) Int. Cl.: B23B 51/00

(54) **BOHRWERKZEUG MIT EINEM GEGEN LÖSEN GESICHERTEN, AUSTAUSCHBAREN SCHNEIDEINSATZ**
BORING TOOL COMPRISING A REPLACEABLE CUTTING INSERT WHICH IS SECURED AGAINST DETACHING
OUTIL DE PERçAGE COMPORTANT UNE PLAQUETTE DE COUPE REMPLAçABLE INDESSERABLE

(30) Priorität: 31.07.1998 DE 19834635
(43) Veröffentlichungstag der Anmeldung: 23.05.2001
(73) Patentinhaber: Gühring, Jörg, Dr., 72458 Albstadt (DE)
(72) Erfinder: SCHULZ, Armin, D-72488 Sigmaringen (DE)
(74) Vertreter: Winter, Brandl, Fürniss, Hübner, Röss, Kaiser, Polte, Partnerschaft
(86) Internationale Anmeldenummer: EP9905217
(87) Internationale Veröffentlichungsnummer: WO00007761

(56) Entgegenhaltungen:
- DE-A- 2 646 528
- DE-A- 4 239 311
- DE-A- 4 435 857

## Beschreibung

Die Erfindung betrifft ein Bohrwerkzeug, insbesondere Spitzbohrwerkzeug, mit einem, gegen Lösen gesicherten, austauschbaren Schneideinsatz gemäß dem Oberbegriff des Patentanspruchs 1.

Aus der europäischen Patentschrift EP-B-0625395 ist ein gattungsgemäßes Bohrwerkzeug bekannt, das einen Halter mit einem axialen Klemmschlitz aufweist, in dem ein plattenförmiges Bohrmesser als der austauschbare Schneideinsatz an der Grundfläche des Klemmschlitzes anliegend eingesetzt ist. Die kraftschlüssige Befestigung des Bohrmessers an den Halter erfolgt über wenigstens einen mit einem Kopf versehenen Schraubbolzen, der in eine Bohrung in wenigstens einem der Klemmschlitzschenkel sowie in eine Bohrung im Bohrmesser eingreift. Die Mittelachse der Bohrung im Klemmschlitzschenkel ist gegenüber der Mittelachse der Bohrung im Bohrmesser in Längs- und Querrichtung des Bohrwerkzeugs versetzt. Des weiteren ist wenigstens einer von zwei einander zugekehrten Umfangsrändern des Schraubbolzens und der Bohrmesser-Bohrung abgeschrägt. Um eine genaue Zentrierung des Bohrmessers in Bezug auf die Drehachse des Halters zu ermöglichen, ist in einer sich von der Klemmschlitzgrundfläche aus in den Halter erstreckenden Bohrung ein Abschnitt eines Zentrierstifts eingesetzt, dessen anderen Abschnitt in einen Zentrierschlitz in der an der Klemmschlitzgrundfläche anliegenden Seite des Bohrmessers eingreift, um das Bohrmesser in Bezug auf die Drehachse des Halters zu zentrieren. Die Nennbreite des Zentrierschlitzes ist größer gewählt als die des in den Zentrierschlitz eingreifenden Abschnitts des Zentrierstifts. Die Richtung und Größe der Versetzung der Mittelachsen von Bohrmesser-Bohrung und Klemmschlitzschenkel-Bohrung sind ferner so gewählt, daß im gespannten Zustand des Schraubbolzens nur eine Seitenfläche des Zentrierschlitzes in der zentrierten Lage des Bohrmessers an einer Seite des Zentrierstiftes anliegt.

Durch die vorstehend beschriebene Ausgestaltung des Bohrwerkzeugs kann zwar der Toleranzbereich der Lage der am Zentrierstift anliegenden Seitenfläche des Zentrierschlitzes beliebig klein gewählt werden, jedoch ist der große herstellungstechnische Aufwand, der bei der Anfertigung des Zentrierschlitzes im Bohrmesser im Hinblick auf die relative Anordnung zur Bohrung zur Aufnahme des Zentrierstifts im Halter betrieben werden muß, von Nachteil. Des weiteren wird bei dem vorstehend beschriebenen Bohrwerkzeug als nachteilig angesehen, daß bei der Bearbeitung des Klemmschlitzes und der Anfertigung der Bohrung in der Klemmschlitzgrundfläche bzw. des Zentrierschlitzes im Bohrmesser im Hinblick auf ein möglichst minimales Spiel zwischen dem Bohrmesser und dem Klemmschlitz eine sehr hohe Präzision erforderlich ist. Bereits geringfügige Toleranzen können dazu führen, daß das Bohrmesser zwar mittels des Schraubbolzens zunächst nach der Montage im Klemmschlitz lagerichtig eingepaßt ist, jedoch eine stabile Anlage des Bohrmessers an der Klemmschlitzgrundfläche in der gewünschten Weise während des Betriebs des Bohrwerkzeugs nicht immer erzielbar ist. Beispielsweise können ungewollte Spalte zwischen der an der Grundfläche des Klemmschlitzes anliegenden Seite des Bohrmessers und der Grundfläche des Klemmschlitzes entstehen, die im Betrieb des Bohrwerkzeugs auftretende Vibrationen noch verstärken können.

Darüber hinaus liegt in der zentrierten Lage des Bohrmessers, wie es vorstehend beschrieben wurde, ein zylindrischer oder im Querschnitt als Vierkant ausgebildeter Zentrierstift an einer Seitenfläche des Zentrierschlitzes des Bohrmessers an. Abgesehen von der hohen mechanischen Beanspruchung des Zentrierstifts während des Einklemmens des Bohrmessers im Klemmschlitz des Halters durch Betätigung des Schraubbolzens muß der Zentrierstift während des Betriebs des Bohrwerkzeugs großen dynamischen Belastungen standhalten. Das Bohrwerkzeug ist während seines Betriebs, beispielsweise durch unterbrochenen Schnitt, üblicherweise starken Vibrationen und Spannungen ausgesetzt. Unter dem Einfluß von Druckkräften, die aus den Spannungen und Vibrationen resultieren, tritt am Zentrierstift insbesondere bei einer zylindrischen Ausgestaltung und an der betreffenden Seitenfläche im Klemmschlitz des Bohrmessers eine Verformung in Gestalt einer rechteckigen Abplattung ein. Des weiteren können sich bei dem zylindrischen Zentrierstift wie auch bei dem im Querschnitt als Vierkant ausgebildeten Zentrierstift infolge der großen Druckkräfte starke Biegeverformungen ergeben, da sich selbst im Fall des im Querschnitt als Vierkant ausgebildeten Zentrierstifts nur eine relativ kleine Querschnittsfläche in Querrichtung des Bohrwerkzeugs, d.h. in Richtung der Nut, erzielen läßt. Derartige Verformungen erlauben einen, wenn auch nur geringfügigen, Versatz des Bohrmessers im Klemmschlitz des Halters. Dies ist für die beabsichtigte exakte und spielfreie Zentrierung des Bohrmessers relativ zur Drehachse des Halters hinderlich. Als eine Folge davon kann sich ein ungenauer Rundlauf des Bohrmessers, insbesondere dessen Spitze, und damit eine Herabsetzung der Standzeit des Bohrmessers und des Bohrwerkzeugs insgesamt einstellen.

Abgesehen von dem herstellungstechnisch hohen Aufwand wird ferner der vorrichtungstechnische Aufwand im Hinblick auf die Kompaktheit des Bohrwerkzeugs und die exakte lagerichtige Positionierung des Bohrmessers über den Zentrierstift im Klemmschlitz des Halters als nachteilig erachtet.

Aufgabe der Erfindung ist es daher, das eingangs beschriebene gattungsgemäße Bohrwerkzeug mit einem, gegen Lösen gesicherten, austauschbaren Schneideinsatz derart weiterzubilden, daß eine vorrichtungstechnisch einfache aber dennoch stabile, exakte und lagerichtige Zentrierung und Fixierung des Schneideinsatzes gegenüber dem Halter gewährleistet ist.

Diese Aufgabe wird durch das erfindungsgemäße Bohrwerkzeug gemäß den Merkmalen des Patentanspruchs 1 gelöst. Vorteilhafte Ausgestaltungen dieses Bohrwerkzeugs sind Gegenstand der Unteransprüche 2 bis 15.

Ein gattungsgemäßes Bohrwerkzeug mit einem austauschbaren Schneideinsatz, wie es im Oberbegriff des Patentanspruchs 1 beschrieben ist, wird im allgemeinen bei hohen Schnittgeschwindigkeiten betrieben. Um den aus den hohen Schnittgeschwindigkeiten resultierenden Vibrationen und den dadurch bedingten dynamischen Beanspruchungen standhalten zu können, weist ein derartiges Bohrwerkzeug meist einen relativ großen Kerndurchmesser auf. Die erfindungsgemäße Weiterentwicklung des gattungsgemäßen Bohrwerkzeugs besteht im besonderen nun darin, daß der Schneideinsatz, der im übrigen vorzugsweise aus Hartmetall hergestellt ist, einen sich in Richtung der Längsachse des Bohrwerkzeugs erstreckenden Fortsatz aufweist, der sich in eine von der Nutgrundfläche aus in Richtung der Längsachse zum Schaftabschnitt hin ausgebildete Vertiefung erstreckt und gegen eine in der Vertiefung vorgesehene zweite Anschlagfläche zur Fixierung des Schneideinsatzes in Richtung der Querachse gepreßt ist. Die Tatsache, daß der Kerndurchmesser gattungsgemäßer Bohrwerkzeuge im allgemeinen relativ groß ist, wird bei der erfindungsgemäßen Weiterentwicklung somit in vorteilhafter Weise zur Ausbildung der Vertiefung zur Aufnahme des axialen Fortsatzes des Schneideinsatzes genutzt. Da aufgrund des relativ großen Querschnitts des Bohrwerkzeugkerns genügend Platz vorhanden ist, kann die Vertiefung ausgebildet werden, ohne dabei die Festigkeit und dadurch die Stabilität des Bohrwerkzeugs wesentlich herabzusetzen.

Die Zentrierung und Fixierung des Schneideinsatzes am Halter erfolgt somit über zwei Anschlagflächen, wobei die erste Anschlagfläche den Schneideinsatz in erster Linie in Richtung der Längsachse und die zweite Anschlagfläche den Schneideinsatz in erster Linie in Richtung der Querachse positionieren soll. Durch eine entsprechende Orientierung der ersten und zweiten Anschlagfläche, beispielsweise durch Ausbildung als Planflächen, die jeweils in einer in Bezug auf die Längsachse nicht normalen Ebene liegen, ist es natürlich auch möglich, daß die erste und zweite Anschlagfläche den Schneideinsatz sowohl in Richtung der Querachse als auch in Richtung der Längsachse positionieren.

Gegenüber dem eingangs beschriebenen herkömmlichen Bohrwerkzeug, bei dem die Funktion der Positionierung in Richtung der Querachse der relativ kleinflächige Zentrierstift ausübt, können bei dem erfindungsgemäßen Bohrwerkzeug sowohl die erste wie auch zweite Anschlagfläche als relativ große Flächen ausgebildet werden, so daß eine relativ großflächige Abstützung des Schneideinsatzes am Halter sowohl in Längsrichtung als auch in Querrichtung möglich ist. Die bislang im Zusammenhang mit der Abstützung des Bohrmessers am Zentrierstift in Richtung der Querachse aufgetretenen hohen statischen wie auch dynamischen Belastungen des Zentrierstifts und des Bohrmessers lassen sich dementsprechend deutlich vermindern, wodurch sich als Ergebnis ein infolge der Abplattung des Zentrierstifts bedingter Versatz des Schneideinsatzes in Richtung der Querachse während des Klemmvorgangs oder während des Betriebs des Bohrwerkzeugs effektiv verhindern läßt. Das erfindungsgemäße Bohrwerkzeug ermöglicht somit einen wesentlich besseren Rundlauf und gewährleistet dadurch eine hohe Qualität bei der Anfertigung von Bohrlöchern.

Die Vertiefung, die sich von der Nutgrundfläche der beispielsweise durch Fräsen hergestellten Nut aus zum Schaftabschnitt hin in den Halter erstreckt, läßt sich beispielsweise durch Bohren oder Fräsen anfertigen. Die Nutgrundfläche weist daher einen Flächeninhalt auf, der um die von der Vertiefung beanspruchte Querschnittsfläche reduziert ist. Fungiert die Nutgrundfläche nun wie bei dem eingangs beschriebenen herkömmlichen Bohrwerkzeug zweckmäßigerweise als die erste Anschlagfläche, so verringert sich aufgrund des kleineren Flächeninhalts der Nutgrundfläche der herstellungstechnische Aufwand im Zusammenhang mit der Präzisionsbearbeitung der ersten Anschlagfläche. Zudem ist die Wahrscheinlichkeit, daß zwischen der ersten Anschlagfläche und der entsprechenden Seite des Schneideinsatzes ungewollte Spalte auftreten, deutlich verringert. An dieser Stelle sei darauf hingewiesen, daß als die erste Anschlagfläche nicht nur die Nutgrundfläche fungieren kann, wenngleich dies im Hinblick auf eine stabile Positionierung des Schneideinsatzes in der Nut sowie im Hinblick auf die Präzisionsbearbeitung der ersten Anschlagfäche von Vorteil wäre, sondern beispielsweise auch die Vertiefungsgrundfläche.

Durch die erfindungsgemäße Weiterbildung des gattungsgemäßen Bohrwerkzeugs reduziert sich ferner die Zahl der Bauteile des Bohrwerkzeugs auf den Halter, den Schneideinsatz und das Klemmelement. Ein Zentrierstift zur Zentrierung des Schneideinsatzes relativ zum Halter ist nicht mehr erforderlich, so daß sich neben dem herstellungstechnischen Aufwand auch der vorrichtungstechnische Aufwand verringert.

Wie die Nut läßt sich auch die zweite Anschlagfläche zur Fixierung des Schneideinsatzes in Richtung der Querachse des Bohrwerkzeugs beispielsweise durch Fräsen problemlös herstellen. Die erste und zweite Anschlagfläche sind im Hinblick auf den herstellungstechnischen Aufwand sowie im Hinblick auf einen möglichst innigen Flächenkontakt mit dem Schneideinsatz vorteilhafterweise als Planflächen ausgebildet, wobei die erste Anschlagfläche vorzugsweise als eine zur Längsachse normale Planfläche und, sofern die Mittelachse der Aufnahmebohrung im Schneideinsatz gegenüber der Mittelachse der Bohrung in dem wenigstens einen Nutschenkel nicht nur in Richtung der Längsachse sondern auch in Richtung der Querachse versetzt ist, auch die zweite Anschlagfläche als eine zur Querachse normale Planfläche ausgebildet ist. Das erfindungsgemäße Bohrwerkzeug ist jedoch nicht nur auf eine derartige Ausgestaltung der ersten und zweiten Anschlagfläche beschränkt. Ebenso wäre es auch denkbar, die erste Anschlagfläche und/oder die Anschlagfläche als Planfläche(n) auszubilden, die nicht normal zur Längsachse bzw. Querachse ausgerichtet sind/ist. Des weiteren können die erste Anschlagfläche wie auch die zweite Anschlagfläche als als gekrümmte Flächen, ausgebildet sein, obgleich sich dadurch der Aufwand im Hinblick auf die Präzisionsbearbeitung dieser Anschlagflächen erheblich erhöhen kann. Die mit der ersten und zweiten Anschlagfläche in Anlage zu bringenden am Schneideinsatz bzw. am Fortsatz des Schneideinsatzes vorgesehenen Seitenflächen sind im Hinblick auf einen möglichst innigen Flächenkontakt, bei dem möglichst wenig ungewollte Spalte auftreten, vorteilhafterweise komplementär zu den am Halter vorgesehenen Anschlagflächen ausgebildet.

Gute Ergebnisse bei der Zerspanung von hochfesten Materialien können insbesondere dann erzielt werden, wenn das Bohrwerkzeug wenigstens eine Spannut aufweist, die im Bereich einer der Spanflächen des Schneideinsatzes ausläuft und bündig in diese übergeht. Wenn in diesem Fall die Vertiefung einen derart großen Querschnitt aufweist, daß die Vertiefung in die Spannut übergeht, so daß sich ein Werkzeug, beispielsweise ein Stirnfräser, in Richtung der Querachse über die Spannut in die Vertiefung einführen läßt, kann die in der Vertiefung vorgesehene zweite Anschlagfläche, die wie vorstehend beschrieben vorzugsweise als eine zur Querachse normale Planfläche ausgebildet ist, problemlos angefertigt werden. Diese Ausgestaltung des erfindungsgemäßen Bohrwerkzeugs erweist sich demnach darin als vorteilhaft, daß sich im Gegensatz zu dem eingangs beschriebenen herkömmlichen Bohrwerkzeug bei dem erfindungsgemäßen Bohrwerkzeug neben der ersten Anschlagfläche auch die zweite Anschlagfläche sowie die entsprechenden, am Schneideinsatz vorgesehenen Seitenflächen entweder als außenliegende oder wenigstens als von außen gut zugängliche Flächen problemlos anfertigen bzw. bearbeiten lassen. Auf diese Weise können somit sämtliche Anschlagflächen des Halters bzw. Seitenflächen des Schneideinsatzes als Planflächen mit einer hohen Oberflächengüte geschaffen werden, was in einer äußerst präzisen und stabilen Zentrierung des Schneideinsatzes am Halter resultiert.

Im Hinblick auf größtmögliche Stabilität des Bohrwerkzeugs insgesamt, durchsetzt das Klemmelement, das vorzugsweise als ein rotationssymmetrischer Körper ausgebildet ist, vorteilhafterweise neben der im Schneideinsatz ausgebildeten Aufnahmebohrung eine sich durch beide Nutschenkel hindurch erstreckende Bohrung, so daß der Schneideinsatz im montierten Zustand des Bohrwerkzeugs zwischen beide Nutschenkel geklemmt ist. In diesem Fall bietet die Ausgestaltung des Klemmelements als Klemmschraube mit einem Kopfabschnitt, der in einem entsprechend angepaßten Abschnitt der Bohrung in dem einen der Nutschenkel eingesetzt ist, einem Schaftabschnitt, der durch die Aufnahmebohrung im Schneideinsatz geht, und einem Gewindeabschnitt, der in einem mit einem Gewinde versehenen Abschnitt der Bohrung in dem anderen der Nutschenkel eingreift, eine kostengünstige und präzise herstellbare Ausgestaltung des Klemmelements.

Der Versatz der Mittelachse der Aufnahmebohrung im Schneideinsatz gegenüber der sich durch beide Nutschenkel hindurch erstreckenden Bohrung kann den jeweiligen Anforderungen entsprechend beispielsweise so gewählt sein, daß die Mittelachse der Aufnahmebohrung im Schneideinsatz gegenüber der Mittelachse der sich durch beide Nutschenkel hindurch erstreckenden Bohrung in Richtung der Längsachse und in Richtung der Querachse parallel versetzt angeordnet ist. Es ist jedoch auch möglich, daß die Mittelachse der Aufnahmebohrung im Schneideinsatz und die Mittelachse der sich durch beide Nutschenkel hindurch erstreckenden Bohrung jeweils in einer von zwei, in Richtung der Längsachse beabstandet angeordneten, parallelen Ebenen liegen, wobei Mittelachse der Aufnahmebohrung im Schneideinsatz, in Richtung der Längsachse betrachtet, die Mittelachse der sich durch beide Nutschenkel hindurch erstreckenden Bohrung unter einem bestimmten Winkel schneidet.

Die relative Anordnung und Lage der beiden Mittelachsen zueinander hängt auch von der Gestaltung des Klemmelements und der Aufnahmebohrung im Schneideinsatz ab. Durch eine geeignete Gestaltung des Klemmelements und der Aufnahmebohrung im Schneideinsatz unter Berücksichtigung der relativen Anordnung und Lage der beiden Mittelachsen läßt sich die Verteilung der über das Klemmelement entlang der Innenwand der Aufnahmebohrung auf den Schneideinsatz ausgeübten Druckkraft positiv beeinflussen und damit eine nahezu drehmomentfreie Anpressung des Schneideinsatzes gegen die in der Vertiefung vorgesehene zweite Anschlagfläche erzielen. Wird der Schneideinsatz in diesem Fall durch Betätigung des Klemmelements gegen die Nutschenkel des Halters geklemmt, erfährt er somit eine Klemmkraft, deren Klemmkraftkomponenten-Wirkungslinien im wesentlichen nur gegen die erste wie auch zweite Anschlagfläche gerichtet sind.

Um eine möglichst gute Preßkraftverteilung entlang der Innenwand der Aufnahmebohrung im Schneideinsatz zu erzielen, hat es sich als vorteilhaft herausgestellt, wenn die Schrägfläche durch eine wenigstens abschnittsweise konische Ausbildung der Aufnahmebohrung im Schneideinsatz und/oder der Klemmschraube realisiert wird. In diesem Fall wirkt bei der Betätigung der Klemmschraube die an dem einen Bauteil vorgesehene Konusfläche in Form einer ersten Keilfläche mit der an dem anderen Bauteil vorgesehenen Fläche in Form einer zweiten Keilfläche in der Art und Weise eines sogenannten Keilflächengetriebes zusammen, durch welches mit einer bei Betätigung der Klemmschraube aufzubringenden verhältnismäßig kleinen Kraft in Richtung der Mittelachse der sich durch beide Nutschenkel hindurch erstreckenden Bohrung (bei relativ großem Weg der Klemmschraube) eine große Kraftwirkung (Keilwirkung) senkrecht zu den Keilflächen erzielt wird, wodurch der Schneideinsatz (bei relativ kleinem Weg) gegen die erste wie auch zweite Anschlagfläche gepreßt wird.

Zur Ausbildung eines derartigen Keilflächengetriebes, wie es vorstehend erwähnt wurde, genügt es im Grunde, wenn nur die Aufnahmebohrung oder die in die Aufnahmebohrung eingreifende Klemmschraube wenigstens abschnittsweise konisch ausgebildet ist, so daß die an einem der Bauteile (d.h. an der Klemmschraube oder an der Aufnahmebohrung im Schneideinsatz) vorgesehene Konusfläche die am anderen Bauteil (d.h. an der Aufnahmebohrung im Schneideinsatz oder an der Klemmschraube) vorgesehene Gegenfläche, die beispielsweise auch zylindrisch ausgebildet sein könnte, unter einem spitzen Winkel, dem sogenannten Keilwinkel schneidet.

Die Aufnahmebohrung im Schneideinsatz weist jedoch bevorzugt als eine der Keilflächen eine konische Innenfläche und der in die Aufnahmebohrung eingreifende Schaftabschnitt der Klemmschraube als die andere Keilfläche eine konische Außenfläche auf. Ebenso wäre es jedoch auch möglich, wenn die Aufnahmebohrung im Schneideinsatz als eine Keilfläche eine zylindrische Innenfläche und der in die Aufnahmebohrung eingreifende Schaftabschnitt der Klemmschraube als die andere. Keilfläche eine konische Außenfläche aufweist.

Um einen optimalen Spannungszustand zu erzielen und den Schneideinsatz drehmomentfrei mit der Klemmkraft zu beaufschlagen, ist es ferner von Vorteil, wenn die Mittelachse der sich durch beide Nutschenkel hindurch erstreckenden Bohrung die Längsachse des Bohrwerkzeugs kreuzt.

Für den Fall, daß das Klemmelement als eine Klemmschraube ausgestaltet ist, die eine durch beide Nutschenkel hindurch gehende Bohrung durchsetzt, hat es sich im Hinblick auf eine vollflächige Anlage des Schneideinsatzes am Halter weiter als vorteilhaft erwiesen, wenn unterhalb des Vertiefungsgrundes ein sich von der Vertiefungsgrundfläche aus in Längsrichtung zum Schaftabschnitt hin erstreckender Klemmschlitz ausgebildet ist, der in einer ersten Ebene liegt, die unter einem bestimmten Winkel gegenüber der von der Querachse und der Längsachse aufgespannten Ebene verdreht ist und die Mittelachse der sich durch beide Nutschenkel hindurch erstreckenden Bohrung normal auf dieser ersten Ebene steht. Durch diese Maßnahme kann auch bei nicht genau auf das Nutprofil abgestimmtem Schneideinsatz, insbesondere bei in Bezug auf die Nutseitenflächen nicht exakt planparallelen Seitenflächen des Schneideinsatzes, eine vollflächige Anlage der Seitenflächen des Schneideinsatzes an der jeweiligen Nutseitenfläche erzielt werden. Somit ist vorteilhafterweise einer im Stand der Technik nahezu nicht vermeidbaren Vibration des Schneideinsatzes in der Nut bei kritischen Bearbeitungsaufgaben jegliche Grundlage entzogen.

In ersten Versuchen mit einem Prototypen konnten besonders gute Wirkungen nachgewiesen werden, wenn der vorstehend beschriebene Klemmschlitz in einer ersten Ebene liegt, die unter einem Winkel, der beispielsweise zwischen 0° und 30°, vorzugsweise 10°, beträgt, gegenüber der von der Querachse und der Längsachse aufgespannten Ebene verdreht ist. Des weiteren kann mit einem Verhältnis zwischen dem Durchmesser des Bohrwerkzeugs und der Erstreckungstiefe des Klemmschlitzes von der Nutgrundfläche aus in Richtung zum Schaftabschnitt im Bereich zwischen 2,5 und 6 eine gute Klemmwirkung erreicht werden. Als besonders vorteilhaft hat sich hier ein Verhältnis von ungefähr 4 herausgestellt.

Als ein überraschender Effekt bei dieser erfindungsgemäßen Weiterbildung eines gattungsgemäßen Bohrwerkzeugs hat sich ergeben, daß durch den im Halter zusätzlich zur Nut und Vertiefung ausgebildeten Klemmschlitz anstatt einer eventuell zunächst erwarteten Schwächung des Bohrwerkzeugs im Vergleich zu einem im Bereich unterhalb der Vertiefungsgrundfläche aus Vollmaterial bestehenden Bohrwerkzeugs wider Erwarten eine Erhöhung der Stabilität des Bohrwerkzeugs durch das Zusammenwirken der Kräfte und Momente, die durch den über die Klemmschraube zusammengespannten Klemmschlitz erzielt werden, erreicht . wird, wodurch zudem ein absolut spielfreier, vollflächig kraftschlüssiger Sitz des Schneideinsatzes im Halter gewährleistet ist. Dabei erlaubt diese Weiterbildung vorteilhafterweise größere Fertigungstoleranzen bei der Herstellung der Nut und somit eine wirtschaftlichere Herstellung des Schneideinsatzsitzes, was in entsprechender Weise ebenso für die Herstellung des Schneideinsatzes gilt.

In einer weiteren vorteilhaften Ausgestaltung hat die Nut, im Querschnitt betrachtet, ein trapezförmiges Profil mit unter einem bestimmten Neigungswinkel gegenüber der von der Längsachse und der Querachse aufgespannten Ebene zur Bohrerspitze hin nach innen geneigten Innenflächen der Nutschenkel. Dabei kann der Neigungswinkel zwischen 0° und 5° betragen, bevorzugt wird jedoch ein Neigungswinkel von etwa 1,5°. Diese Ausgestaltung kann bei gleichzeitig analog modifizierten Seitenflächen des Schneideinsatzes mit demselben Neigungswinkel, sofern der Schneideinsatz beispielsweise über die vorstehend erwähnte Spannut in Richtung der Querachse in die Nut einführbar ist, eine Erleichterung der Montage des Bohrwerkzeuges und damit eine Reduzierung der Herstellungskosten ermöglichen, da der Schneideinsatz nach dessen Einfügen im verspannten Zustand durch das trapezförmige Nutprofil gegen Herausfallen gesichert ist.

Wie es bereits erwähnt wurde, werden gattungsgemäße Bohrwerkzeuge mit austauschbaren Schneideinsätzen im allgemeinen bei hohen Schnittgeschwindigkeiten betrieben. Um den aus den hohen Schnittgeschwindigkeiten resultierenden Vibrationen und den dadurch bedingten dynamischen Beanspruchungen standhalten zu können, weisen derartige Bohrwerkzeuge meist einen relativ großen Kerndurchmesser auf, was eine Abnahme des Spannutvolumens zur Folge hat. Der aus dem geringeren Spannutvolumen resultierende Nachteil im Hinblick auf eine schlechtere Späneabfuhr aus dem Bohrloch läßt sich beispielsweise jedoch dadurch beheben, daß die Späneabfuhr mittels eines unter hohem Druck an die Bohrwerkzeugspitze zugeführten Kühl- und/oder Schmiermittels, beispielsweise einer Schneidemulsion, zur Kühlung und/oder Schmierung des Bohrwerkzeugs unterstützt wird. Die Kühl- und/oder Schmiermittelzufuhr erfolgt vorzugsweise über einen im wesentlichen in Richtung der Längsachse verlaufenden, am Kopfabsachnitt des Halters austretenden Kühlmittelkanal, der sich in dem in der Nähe des Kopfabschnitts des Halters liegenden Bereich vorzugsweise in zwei Teilkanäle teilt, die jeweils an einer Stirnflächen der Nutschenkel austreten.

Der erfindungsgemäße Aufbau der Bohrspitzenhalterung eignet sich im Prinzip für alle gängigen Schneidenverläufe und Bohrwerkzeugspitzengeometrien. Dies ist in erster Linie darauf zurückzuführen, daß die zur Befestigung des Schneideinsatzes erforderlichen Funktionsflächen möglichst einfach gehalten sind. Mit der erfindungsgemäßen Gestaltung der Befestigung kann das Verhältnis zwischen dem Durchmesser des Bohrwerkzeugs, d. h. der Abstand der beiden Nebenschneiden voneinander, zu der Abmessung des Schneideinsatzes in Richtung der Längsachse des Bohrwerkzeugs erheblich angehoben werden, vorzugsweise in einen Bereich von etwa 1,5. Es hat sich gezeigt, daß die Bohrwerkzeugspitzenhalterung ohne weiteres für Bohrwerkzeuge einsetzbar ist, die Bohrungstiefen von bis zu 10 x d erlauben. Das Verhältnis zwischen dem Durchmesser des Bohrwerkzeugs und der axialen Länge eines Führungsabschnitts des Schneideinsatzes ist vorzugsweise bis in den Bereich um 3,5 angehoben.

Das erfindungsgemäße Bohrwerkzeug und vorteilhafte oder alternative Weiterentwicklungen werden anhand eines bevorzugten Ausführungsbeispielen und einigen Abwandlungen unter Bezugnahme auf die beigefügten Zeichnungen näher erläutert. Es zeigen:
- Fig. 1: eine Seitenansicht eines Halters des erfindungsgemäßen Bohrwerkzeugs,
- Fig. 2: eine vergrößerte Seitenansicht des Kopfabschnitts des in Fig. 1 dargestellten Halters,
- Fig. 3a: eine frontale Draufsicht des Kopfabschnitts des in den Figuren 1 und 2 dargestellten Halters,
- Fig. 3b: eine Schnittansicht des Kopfabschnitts des in den Figuren 1 und 2 dargestellten Halters längs einer Linie IIIb-IIIb in Fig. 2,
- Fig. 3c: eine Schnittansicht eines abgewandelten Kopfabschnitts des in den Figuren 1 und 2 dargestellten Halters längs der Linie IIIb-IIIb in Fig. 2,
- Fig. 4: eine Seitenansicht des erfindungsgemäßen Schneideinsatzes,
- Fig. 5: eine Draufsicht des erfindungsgemäßen Schneideinsatz gemäß Fig. 4,
- Fig. 6a: eine Unteransicht des erfindungsgemäßen Schneideinsatzes gemäß Fig. 4,
- Fig. 6b: eine Unteransicht eines abgewandelten Schneideinsatzes,
- Fig. 7a: eine Seitenansicht des erfindungsgemäßen Schneideinsatzes gemäß Fig. 4 in Richtung der Querachse,
- Fig. 7b: eine Seitenansicht eines abgewandelten des Schneideinsatzes gemäß Fig. 6a in Richtung der Querachse,
- Fig. 8a: eine Seitenansicht des Kopfabschnitts des in Fig. 1 dargestellten Halters mit eingesetztem Schneideinsatz,
- Fig. 8b: eine Teilschnittansicht des Kopfabschnitts des in Fig. 8a dargestellten Halters mit eingesetztem Schneideinsatz längs einer Linie VIII-VIII in Fig. 9a,
- Fig. 9a: eine Schnittansicht des Kopfabschnitts des in den Figuren 8a und 8b dargestellten Bohrwerkzeugs längs einer Linie IX-IX in Fig. 8b;
- Fig. 9b: eine Schnittansicht eines abgewandelten Kopfabschnitts und Schneideinsatzes des in den Figuren 8a und 8b dargestellten Bohrwerkzeugs längs der Linie IX-IX in Fig. 8b;
- Fig. 9c: eine Schnittansicht eines abgewandelten Kopfabschnitts und Schneideinsatzes des in den Figuren 8a und 8b dargestellten Bohrwerkzeugs längs der Linie IX-IX in Fig. 8b;
- Fig. 9d: eine Schnittansicht eines abgewandelten Kopfabschnitts und Schneideinsatzes des in den Figuren 8a und 8b dargestellten Bohrwerkzeugs längs der Linie IX-IX in Fig. 8b; und
- Fig. 10: eine vergrößerte Seitenansicht eines abgewandelten Kopfabschnitts des in den Figuren 1 und 2 dargestellten Halters.

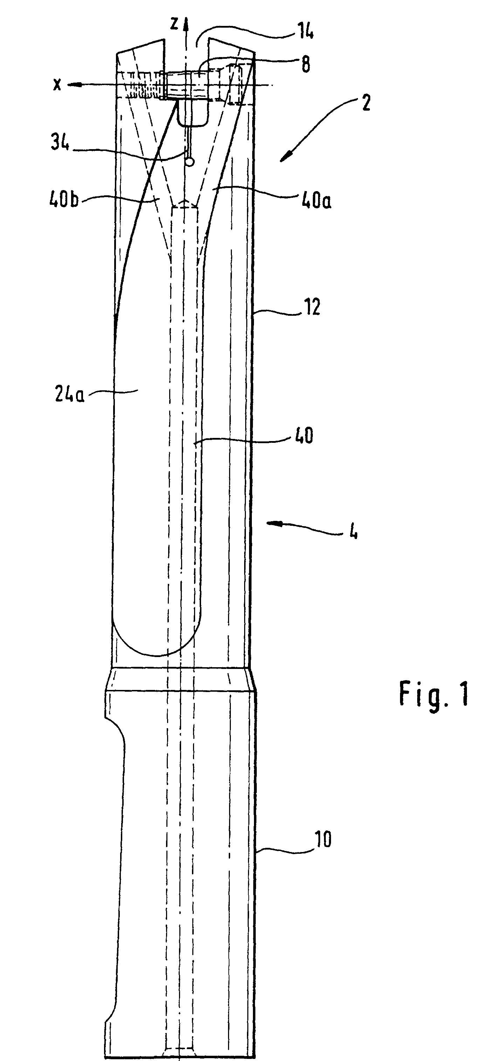

Unter Bezugnahme auf die Figuren 1, 2, 3a, 3b, 4, 5, 6a, 7a, 8a, 8b und 9a wird im folgenden ein bevorzugtes Ausführungsbeispiel des erfindungsgemäßen Bohrwerkzeugs 2 beschrieben.

Das erfindungsgemäße Bohrwerkzeug 2 umfaßt einen Halter 4, einen Schneideinsatz 6 und eine Klemmschraube 8 zur Befestigung des Schneideinsatzes 6 am Halter 4. Diese Bauteile werden nachstehend ausführlich beschrieben.

Der Halter 4 des erfindungsgemäßen Bohrwerkzeugs 2 ist gemäß der Darstellung in den Figuren 1, 2 und 3a im wesentlichen zylindrisch ausgebildet und weist eine Dreh- bzw. Längsachse z und senkrecht dazu verlaufende Querachsen x und y auf. Der Halter 4 ist unterteilt in einen Schaftabschnitt 10, über den das Bohrwerkzeug 2 in eine nicht dargestellte Werkzeugaufnahme eingespannt werden kann, und in einen Kopfabschnitt 12 zur Befestigung des Schneideinsatzes 6.

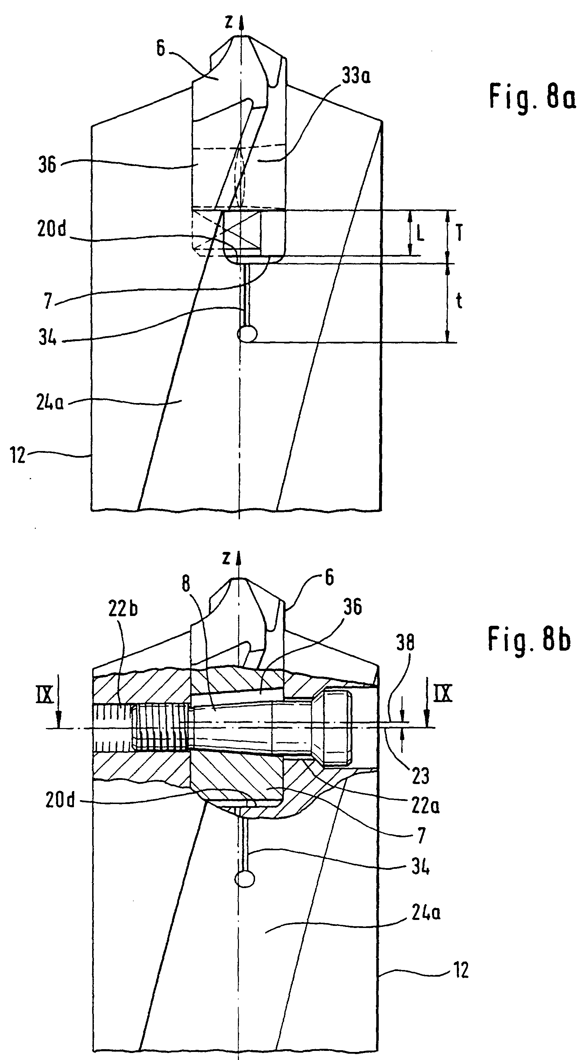

Zu diesem Zweck ist, wie es insbesondere aus der Darstellung in den Figuren 1, 2 und 3a hervorgeht, an dem dem Schaftabschnitt 10 abgewandten, freien Ende des Kopfabschnitts 12 eine in Richtung der Querachse y, diametral durch den Kopfabschnitt 12 verlaufende, beispielsweise herausgefräste, Nut 14 ausgebildet, die sich zur Bohrwerkzeugspitze hin öffnet. Die Nut 14 ist durch Nutseitenflächen 14a, 14b, die zugleich die Innenflächen von Nutschenkeln 16, 18 bilden, sowie durch eine Nutgrundfläche 14c begrenzt. Die Nutseitenflächen 14a und 14b sind in diesem Ausführungsbeispiel als zu der von der Längsachse z und der Querachse y aufgespannten Ebene Ezy parallele, jeweils auf einer entgegengesetzten Seite der Ebene Ezy und von dieser gleich beabstandet angeordnete Planflächen ausgebildet. Die Nutgrundfläche 14c ist in diesem Ausführungsbeispiel ebenfalls als eine Planfläche ausgebildet, die jedoch normal zu der von der Längsachse z und der Querachse y aufgespannten Ebene, d.h. parallel zu der von den Querachsen x und y aufgespannten Ebene Exy, ausgerichtet ist. Die Nutseitenflächen 14a, 14b stehen somit im rechten Winkel zur Nutgrundfläche 14c und sind in Richtung der Querachse y ausgerichtet. Die Nutgrundfläche 14c fungiert in diesem Ausführungsbeispiel ferner als die erste Anschlagfläche, auf der der nachstehend ausführlicher beschriebene Schneideinsatz 6 im montierten Zustand des Bohrwerkzeugs 2 sitzt, wie es insbesondere der Fig. 8a entnehmbar ist.

Mit den Bezugszeichen 24a und 24b sind Spannuten angegeben, die sich um den Außenumfang des Kopfabschnitts 12 des Halters 4 wendelförmig in Richtung der Längsachse z zur Bohrwerkzeugspitze hin erstrecken und an den Stirnseiten am freien Ende des Kopfabschnitts 12 des Halters 4 austreten.

Gemäß der Darstellung in den Figuren 1, 2, 3a und 3b erstreckt sich im Anschluß an die Nut 14 von der Nutgrundfläche 14c ausgehend, parallel zur Längsachse z eine, beispielsweise herausgefräste, Vertiefung 20 in den Kopfabschnitt 12 des Halters 4. Wie es eingangs bereits erwähnt wurde, weist das erfindungsgemäße Bohrwerkzeug 2 einen relativ großen Kerndurchmesser auf, so daß die Ausbildung der Vertiefung 20 im Kern 3 des Bohrwerkzeugs 2 keine wesentliche Beeinträchtigung der Festigkeit und der Stabilität verursacht.

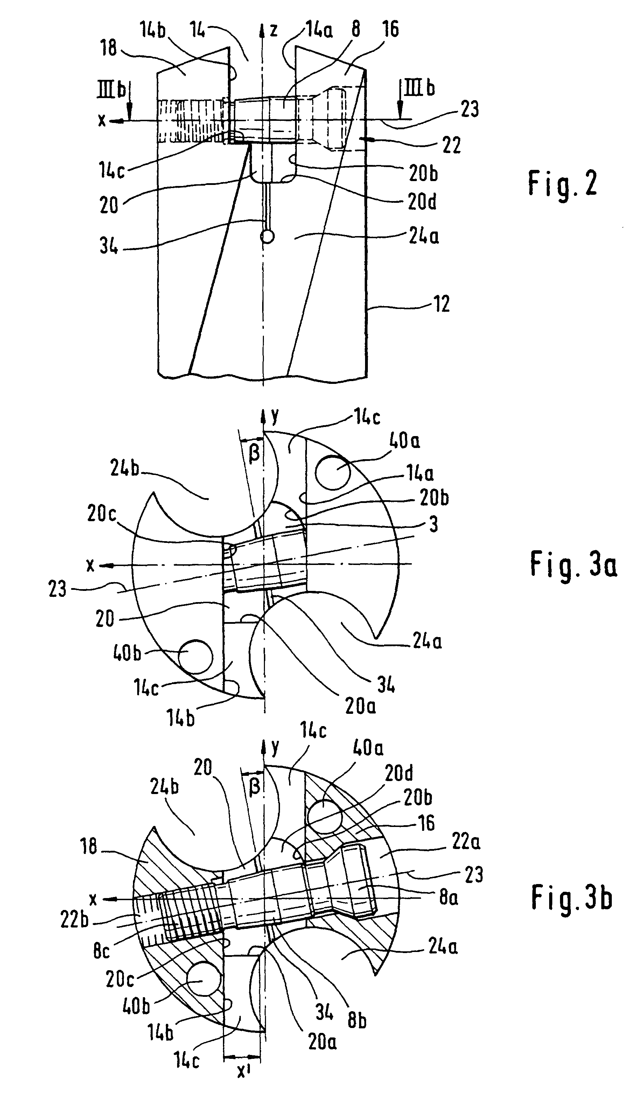

Nun wird auf die Figuren 3a und 3b Bezug genommen; in der Vertiefung 20 ist die zweite Anschiagfläche 20a vorgesehen, an der der Schneideinsatz 6 im montierten Zustand des Bohrwerkzeugs 2 anliegt. Die Vertiefung 20 ist durch Vertiefungsseitenflächen 20b, 20c sowie eine Vertiefungsgrundfläche 20d begrenzt. Die Vertiefungsgrundfläche 20d kann wie die Nutgrundfläche 14c als eine zur Längsachse z normale Planfläche ausgebildet sein. Die Vertiefungsseitenflächen 20b, 20c gehen im Bereich der Nutseitenflächen 14a, 14b im wesentlichen bündig in diese über. In diesem Ausführungsbeispiel ist die zweite Anschlagfläche 20a als eine in Bezug auf die Querachse y normale Planfläche ausgebildet, die die Vertiefungsseitenfläche 20c in einem rechten Winkel schneidet, wodurch die Abmessung x' (vgl. Fig. 3b) von der zweiten Anschlagfläche 20a aus in Richtung der Querachse x maximal wird, wie es aus Fig. 3b hervorgeht.

Die Vertiefung 20 hat in Bezug auf die Längsachse z eine Querschnittsfläche, die in die Querschnittsflächen der Spannuten 24a, 24b mündet. Diese Ausgestaltung verschafft den Vorteil, daß sich über die Spannut 24b beispielsweise ein Fräswerkzeug parallel zur Querachse y in die Vertiefung 20 einführen läßt, um an der Innenfläche 20b der Vertiefung 20 die zweite Anschlagfläche 20a anzufertigen, an der der Schneideinsatz 6 im montierten Zustand des Bohrwerkzeugs 2 anliegt. Die Vertiefung 20 hat gemäß der Darstellung in den Figuren 8a und 8b eine von der Nutgrundfläche 14c aus gemessene Tiefe T, die größer ist als die Länge L des sich in Richtung der Längsachse z erstreckenden Fortsatzes 7 des Schneideinsatzes 6, so daß gewährleistet ist, daß der Schneideinsatz 6 im montierten Zustand des Bohrwerkzeugs 2 auf der ersten Anschlagfläche 14c sitzt und nicht die Vertiefungsgrundfläche 20c berührt.

In diesem Ausführungsbeispiel sind die erste Anschlagfläche 14c und die zweite Anschlagfläche 20a somit entweder von außenliegenden oder wenigstens von außen gut zugänglichen Flächen gebildet, die sich somit problemlos anfertigen bzw. bearbeiten lassen. Die erste Anschlagfläche 14c wie auch die zweite Anschlagfläche 20a weisen daher eine hohe Oberflächengüte auf; dies resultiert in einer äußerst präzisen und stabilen Zentrierung des Schneideinsatzes 6 am Halter 4.

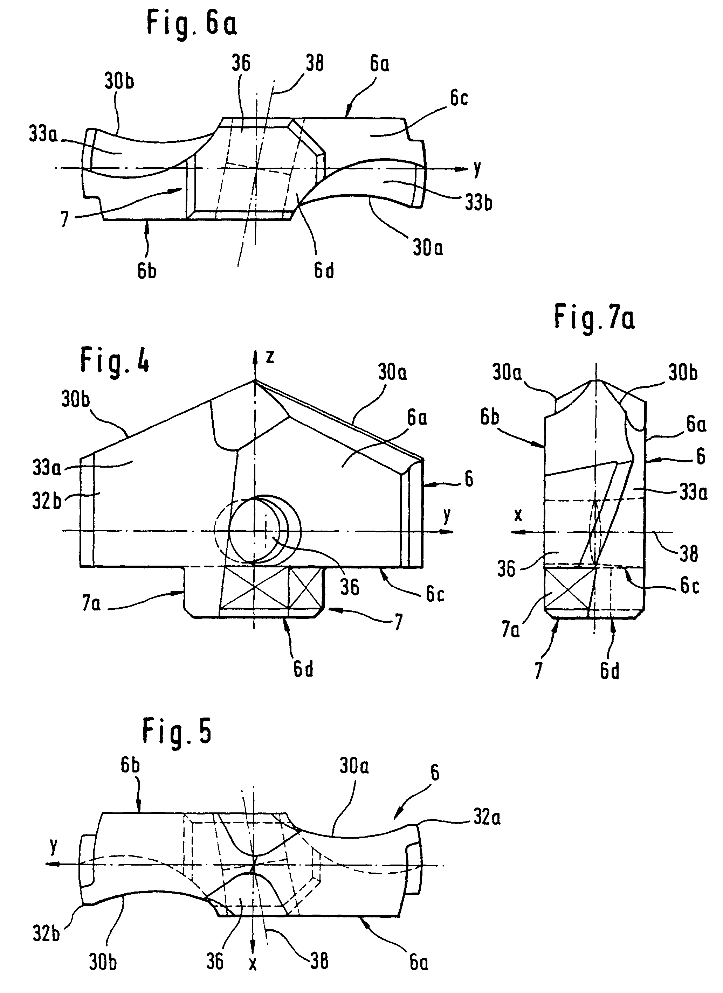

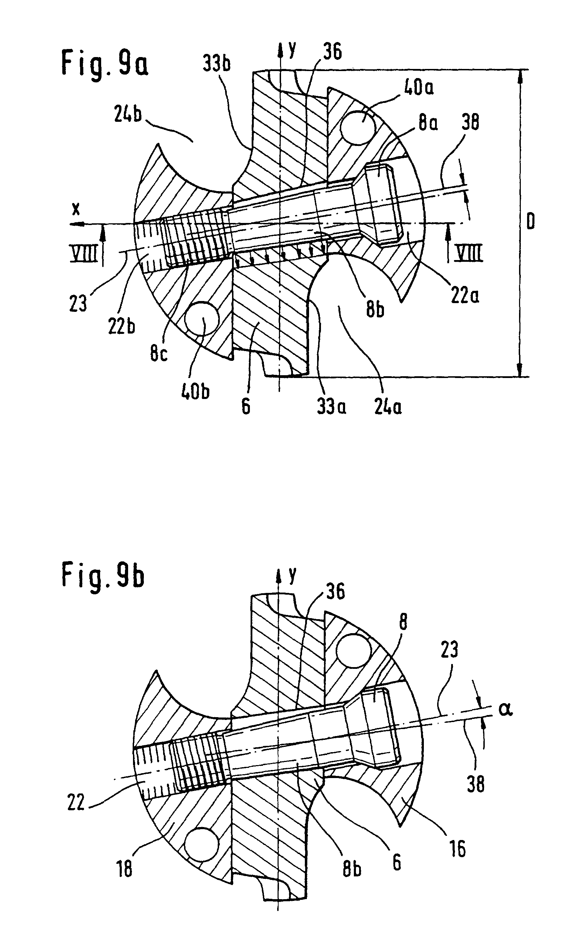

Im Anschluß an die Vertiefung 20 ist in Richtung zum Schaftabschnitt 10 hin des weiteren ein diametral durch den Kopfabschnitt 12 gehender Klemmschlitz 34 ausgebildet, der in einer Ebene liegt, die unter einem Winkel β, der zwischen 0° und 15°, vorzugsweise etwa 10° beträgt, gegenüber der von der Querachse y und der Längsachse z aufgespannten Ebene um die Längsachse z im Gegenuhrzeigersinn verdreht ist. Bei der Montage des Bohrwerkzeugs 2 läßt sich durch den Klemmschlitz 34 und das dadurch bedingte Zusammenwirken der auf den Schneideinsatz 6 einwirkenden Klemmkräfte auch bei nicht genau auf das Nutprofil abgestimmtem Schneideinsatz 6, insbesondere bei in Bezug auf die Seitenflächen 14a und 14b nicht exakt planparallelen Seitenflächen 6a, 6b des Schneideinsatzes 6, die in Fig. 7a zu sehen sind, eine vollflächige Anlage der Seitenflächen 6a und 6b des Schneideinsatzes 6 an der jeweiligen Nutseitenfläche 14a bzw. 14b erzielen. Das Verhältnis zwischen dem in Fig. 9a angegebenen Durchmesser D des Bohrwerkzeugs 2 und der in Fig. 8a angegebenen Erstreckungstiefe t des Klemmschlitzes 34 von der Nutgrundfläche 14c aus in Richtung zum Schaftabschnitt 10 hin liegt im Bereich zwischen 1,5 und 3, vorzugsweise bei etwa 2,25. Bei einem derartigen Verhältnis wird eine gute Klemmwirkung erreicht.

Oberhalb der Nutgrundfläche 14c erstreckt sich eine durch die beiden Nutschenkel 16 und 18 gehende, quer zum Klemmschlitz 20, d.h. normal zu Ebene des Klemmschlitzes 34, ausgerichtete Bohrung 22, deren Mittelachse 23 in einer zur Längsachse z normalen Ebene liegt. Die Bohrung 22 wird von der als das Klemmelement fungierenden Klemmschraube 8 durchsetzt, wie es beispielsweise aus Fig. 3b hervorgeht. Die Bohrung 22 besteht aus dem im Nutschenkel 16 ausgebildeten Bohrungsabschnitt 22a zur Aufnahme eines Kopfabschnitts 8a der Klemmschraube 8 sowie einem im Nutschenkel 18 ausgebildeten Bohrungsabschnitt 22b mit Innengewinde zur Aufnahme eines Außengewindeabschnitts 8c der Klemmschraube 8.

Wie es in Fig. 3b gezeigt ist, besteht die Klemmschraube 8 aus dem Kopfabschnitt 8a, der in dem entsprechend angepaßten Abschnitt 22a der Bohrung 22 im Nutschenkel 16 eingesetzt ist, dem Außengewindeabschnitt 8c, der in dem mit dem Innengewinde versehenen Bohrungsabschnitt 22b der Bohrung 22 im Nutschenkel 18 in Eingriff steht, sowie einem sich zwischen dem Kopfabschnitt 8a und dem Außengewindeabschnitt 8b erstreckenden Schaftabschnitt 8c, der in einer Aufnahmebohrung 36 (vgl. Fig. 4) des nachstehend beschriebenen Schneideinsatzes 6 eingesetzt ist. Der Schaftabschnitt weist eine sich vom Kopfabschnitt 8a zum Gewindeabschnitt 8b hin verjüngende, d.h. konische Außenumfangsfläche auf, wie es beispielsweise aus Fig. 9a hervorgeht.

In den Figuren 4, 5, 6a und 7a ist der in die Nut 14 des Kopfabschnitts 12 des Halters 4 einzusetzende Schneideinsatz 6 dargestellt. Die äußeren Abmessungen des Schneideinsatzes 6 sind dabei unter anderem so gewählt, daß er im montierten Zustand des Bohrwerkzeugs 2 gemäß den Figuren 8a und 8b über das freie Ende des Kopfabschnitts 12 in Richtung der Längsachse z wie auch in Richtung der Querachse y vorsteht. Wie es oben bereits erwähnt wurde, weist der Schneideinsatz 6 den sich im montierten Zustand in die Vertiefung 20, zum Schaftabschnitt 10 hin erstreckenden Fortsatz 7 mit einem gemäß der Darstellung in Fig. 6a im wesentlichen rechteckigen Querschnitt auf, der insbesondere infolge einer relativ großen Abmessung in Richtung der Querachse y einen insgesamt relativ großen Flächeninhalt hat. An diesem Fortsatz 7 ist eine zur Querachse y normale Planfläche 7a ausgebildet, über die der Schneideinsatz 6, wie es vorstehend bereits erwähnt wurde, im montierten Zustand des Bohrwerkzeugs 2 an der zweiten Anschlagfläche 20a anliegt. Diese konstruktive Maßnahme bestimmt schließlich die Lageorientierung des Schneideinsatzes 6 in der Nut 14 des Kopfabschnitts 12. Ein Wenden des Schneideinsatzes 6 um 180° um die Längsachse z ist in diesem Ausführungsbeispiel somit nicht möglich.

Wie es in den Figuren 4, 5, 6a und 7a gezeigt ist, hat der Schneideinsatz 6 Hauptschneiden 30a, 30b, die einen stumpfen Winkel einschließen, Nebenschneiden 32a, 32b sowie Spanflächen 33a, 33b. Wie es beispielsweise in den Figuren 8a und 9a gezeigt ist, laufen die im Halter 4 ausgebildeten Spannuten 24a, 24b jeweils im Bereich einer der beiden Spanflächen 33a, 33b aus und gehen in diese über. Der Schneideinsatz 6 ist ferner durch die vorstehend erwähnten Seitenflächen 6a und 6b, über die der Schneideinsatz 6 an der jeweiligen Nutseitenfläche 14a, 14b anliegt und die jeweils in die Seitenflächen des Fortsatzes 7 übergehen, eine eigentlich aus zwei Teilflächen bestehende Fläche 6c, über die der Schneideinsatz 6 an der ersten Anschlagfläche 14c anliegt, sowie eine untere Fläche 6d begrenzt, die im montierten Zustand von der Vertiefungsgrundfläche 20d beabstandet angeordnet ist. Die Seitenflächen 6a, 6b, die Fläche 6c und die Seitenfläche 7a, die in diesem Ausführungsbeispiel Funktionsflächen bilden, sind im Hinblick auf eine möglichst großflächige und stabile Anlage komplementär zu den jeweiligen Gegenflächen, d.h. den Nutseitenflächen 14a, 14b, der Nutgrundfläche 14c bzw. der zweiten Anschlagfläche 20a, d.h. als zur Längsachse bzw. der Querachse normale Planflächen, ausgebildet. Am Schneideinsatz 6 ist des weiteren eine Aufnahmebohrung 36 mit einer sich im montierten Zustand des Bohrwerkzeugs 2 vom Bohrungsabschnitt 22a im Nutschenkel 16 zum Bohrungsabschnitt 22b im Nutschenkel 18 hin konisch verjüngenden Innenumfangsfläche ausgebildet.

Wie es aus den Figuren 8b und 9a hervorgeht, weist die rotationssymmetrische Außenumfangsfläche des Schaftabschnitts 8b der Klemmschraube 8 dieselbe Konizität auf wie die Innenumfangsfläche der Aufnahmebohrung 36, ist jedoch im Durchmesser kleiner als die Aufnahmebohrung 36. Die Mittelachse 38 der Aufnahmebohrung 36 im Schneideinsatz 6 ist in derselben Richtung orientiert wie die Mittelachse 23 der sich durch die beiden Nutschenkel 16, 18 hindurch erstreckenden Bohrung 22. Den Darstellungen in den Figuren 8b und 9a ist ferner entnehmbar, daß die Mittelachse 38 der Aufnahmebohrung 36 im Schneideinsatz 6 gegenüber der Mittelachse 23 der sich durch die beiden Nutschenkel 16, 18 hindurch erstreckenden Bohrung 22 sowohl in Richtung der Querachse y wie auch in Richtung der Längsachse z parallel versetzt angeordnet ist.

Die konische Außenumfangsfläche des Schaftabschnitts 8b und die ebenfalls konische Innenumfangsfläche der Aufnahmebohrung 36 des Schneideinsatzes 6 bilden jeweils eine von zwei Keilflächen eines sogenannten "Keilflächengetriebes", durch welches mit einer bei Betätigung der Klemmschraube 8 aufzubringenden, verhältnismäßig kleinen Kraft in Richtung der Mittelachse 23 der sich durch beide Nutschenkel 16, 18 hindurch erstreckenden Bohrung 22 (bei relativ großem Weg der Klemmschraube 8) eine große Kraftwirkung (Keilwirkung) senkrecht zu den beiden Keilflächen erzielt wird, wodurch der Schneideinsatz 6 (bei relativ kleinem Weg) eine Druckkraft in Richtung der Längsachse z wie auch in Richtung der Querachse y erfährt. Während der Montage des Schneideinsatzes 6 auf den Halter 4 bewegen die beiden Mittelachsen 38 und 23 der Aufnahmebohrung 36 bzw. der Bohrung 22 aufeinander zu; aufgrund der unterschiedlichen Durchmesser der Aufnahmebohrung 36 und der Bohrung 22 kommen sie jedoch nicht zur Deckung.

Bei der Betätigung der Klemmschraube 8 übt der Schaftabschnitt 8b demnach über das Keilflächengetriebe auf den Schneideinsatz 6 eine erste Durckkraftkomponente gegen die erste Anschlagfläche 14c und eine zweite Druckkraftkomponente gegen die zweite Anschlagfiäche 20a aus, wodurch der Schneideinsatz 6 sowohl in Richtung der Längsachse z wie auch in Richtung der Querachse y fest gegen die erste als auch zweite Anschlagfläche 14c, 20a gedrückt wird.

Der Schneideinsatz ist somit gegen Vibrationen während des Betriebs des Bohrwerkzeugs gesichert. Die Richtung und Größe des Versatzes der Mittelachsen 23 und 38 sind zu diesem Zweck im besonderen so gewählt, daß im montierten Zustand des Bohrwerkzeugs 2 der den ersten und zweiten Anschlagflächen 14c, 20a zugewandte Außenumfangsflächenbereich des Schaftabschnitts 8b der Klemmschraube 8 an dem gegenüberliegenden Innenumfangsflächenbereich der Aufnahmebohrung 36 des Schneideinsatzs 6 eng anliegt, wie es den Darstellungen in den Figuren 8b und 9a entnehmbar ist.

Die Verteilung der über die Außenumfangsfläche des Schaftabschnitts 8b bei Betätigung der Kopfabschraube 8 ausgeübte Druckkraft an der Innenumfangsfläche der Aufnahmebohrung 36 des Schneideinsatzes 6 wird letztlich auch durch die Kontaktlänge der Außenumfangsfläche des Schaftabschnitts 8b der Klemmschraube 8 und der Innenumfangsfläche der Aufnahmebohrung 36 im Schneideinsatz 6 in Richtung der Querachse x bestimmt. Da in diesem Ausführungsbeispiel die Länge der Außenumfangsfläche des Schaftabschnitts 8b der Klemmschraube 8 im wesentlichen der Länge der Innenumfangsfläche der Aufnahmebohrung 36 im Schneideinsatz entspricht, wie dies aus Fig. 9a hervorgeht, wird der Schneideinsatz 6 im wesentlichen über die ganze Länge der Innenumfangsfläche der Aufnahmebohrung 36 mit der Druckkraft beaufschlagt, so daß der Schneideinsatz 6 die resultierende Druckkraftwirkungslinie in Richtung der Querachse x etwa auf halber Kontaktlänge der Außenumfangsfläche des Schaftabschnitts 8b der Klemmschraube 8 und der Innenumfangsfläche der Aufnahmebohrung 36 im Schneideinsatz 6 erfährt.

Bei der Betätigung der Klemmschraube 8 erfährt der Schneideinsatz 6 somit eine Druckkraft, deren Wirkungslinie gegen die erste und zweite Anschlagfläche 14c, 20a gerichtet ist. Gleichzeitig wird der Schneideinsatz 6 bei sich aneinander annähernden Klemmschlitzseitenflächen an die Nutschenkel 16, 18 gepreßt. Dabei erfährt der Kopfabschnitt 12, insbesondere die Nutschenkel 16, 18, eine elastische Verformung, die einen Spannungszustand hervorruft, der selbst im Fall des Auftretens einer starken Vibration des Bohrwerkzeugs 2 zu einer hohen Stabilität und einer zuverlässigen Fixierung des Schneideinsatzes 6 am Halter 4 bewirkt.

Die Zentrierung und Fixierung des Schneideinsatzes 6 in der im Kopfabschnitt 12 ausgebildeten Nut 14 erfolgt, wie bereits erwähnt, über die erste Anschlagfläche 14c und die zweite Anschlagfläche 20a, wobei die erste Anschlagfläche 14c den Schneideinsatz 6 in Richtung der Längsachse z und die zweite Anschlagfläche 20a den Schneideinsatz 6 in Richtung der Querachse y positioniert. Durch die relativ großflächige Abstützung des Schneideinsatzes 6 an den beiden Anschlagflächen 14c, 20a einerseits und die relative große Querschnittsfläche des Fortsatzes 7, insbesondere in Richtung der Querachse y andererseits, läßt sich ein infolge Druckbeanspruchung des Fortsatzes 7 verformungsbedingter Versatz des Schneideinsatzes 6 in Richtung der Querachse y während des Betriebs des Bohrwerkzeugs 2 effektiv verhindern.

Die äußeren Abmessungen des Schneideinsatzes 6 wie auch des Fortsatzes 7 sind auf die jeweiligen Abmessungen der im Kopfabschnitt 12 ausgebildeten Nut 14 wie auch der Vertiefung 20 natürlich derart abgestimmt, daß sich ein Klemmzustand erzielen läßt, wie er aus den Figuren erkennbar ist. Im Hinblick auf eine ausreichende Stabilität des Bohrwerkzeugs 2 ist unter anderem entscheidend, daß im montierten Zustand des Bohrwerkzeugs 2 die Seitenflächen 6a, 6b des Schneideinsatzes 6 vollständig, d.h. möglichst ohne Spalte, an der jeweiligen Nutseitenfläche 14a, 14b anliegen. Zu diesem Zweck ist es vorteilhaft, wenn die Breite des Klemmschlitzes 34 quer zur Querachse y so gewählt ist, daß selbst im montierten Zustand des Bohrwerkzeugs 2 der Klemmschlitz 34 nicht geschlossen ist, d.h. die Klemmschlitzseitenflächen einander nicht berühren. Des weiteren muß der Versatz der Mittelachse 23 der Bohrung 22 gegenüber der Mittelachse 38 der Aufnahmebohrung 36 so groß gewählt sein, daß im montierten Zustand des Bohrwerkzeugs 2 auf den Schneideinsatz derart große Klemmkräfte wirken, daß die am Schneideinsatz vorgesehenen Flächen 7a und 6c vollständig an der zweiten Anschlagfläche 20a bzw. an der ersten Anschlagfläche 14c anliegen.

Wie die Figuren 1, 3a, 3b und 9a zeigen, ist im Halter 4 ferner ein Kühl- und/oder Schmiermittelkanal 40 ausgebildet, der sich im oberen Bereich des Kopfabschnitts 12 des Halters 4 in zwei Teilkanäle 40a und 40b teilt. Die beiden Teilkanäle 40a und 40b treten jeweils an der Stirnfläche des freien Endes des Kopfabschnitts 12 des Halters 4 aus. Wie es bereits erwähnt wurde, werden gattungsgemäße Bohrwerkzeuge mit austauschbaren Schneideinsätzen im allgemeinen bei hohen Schnittgeschwindigkeiten betrieben. Um den aus den hohen Schnittgeschwindigkeiten resultierenden Vibrationen und den dadurch bedingten dynamischen Beanspruchungen standhalten zu können, weisen derartige Bohrwerkzeug meist einen relativ großen Kerndurchmesser auf, was eine Abnahme des Spannutvolumens zur Folge hat. Der aus dem geringeren Spannutvolumen resultierende Nachteil im Hinblick auf eine schlechtere Späneabfuhr aus dem Bohrloch läßt sich bei dem erfindungsgemäßen Bohrwerkzeug 2 jedoch dadurch kompensieren, daß die Späneabfuhr mittels eines unter hohem Druck an die Bohrwerkzeugspitze zugeführten Kühl- und/oder Schmiermittels, beispielsweise einer Schneidemulsion, zur Kühlung und/oder Schmierung des Bohrwerkzeugs 2 unterstützt wird.

Selbstverständlich sind Abweichungen von dem zuvor beschriebenen Ausführungsbeispiel möglich, ohne den Grundgedanken der Erfindung zu verlassen.

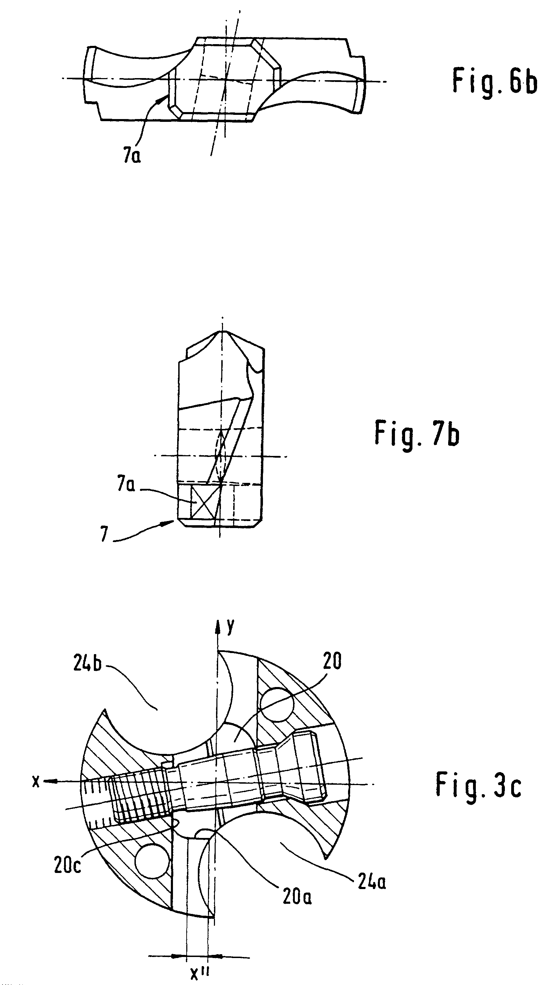

Die Figuren 3c, 6b und 7b zeigen eine Abwandlung des vorstehend beschriebenen Ausführungsbeispiels des erfindungsgemäßen Bohrwerkzeugs 2 in Bezug auf die in der Vertiefung 20 vorgesehene zweite Anschlagfläche 20a und die am Fortsatz 7 des Schneideinsatzes 6 vorgesehene Planfläche 7a, die im montierten Zustand des Bohrwerkzeugs 2 an der zweiten Anschlagfläche 20a anliegt. Die zweite Anschlagfläche 20a geht in dieser Abwandlung in die Vertiefungsgrundfläche 20b in eine Rundung über, die beispielsweise einen Durchmesser hat, der dem Durchmesser eines in eine Richtung parallel zur Längsachse z eingeführten Fräswerkzeugs entspricht. Im Gegensatz zu dem in Fig. 3b gezeigten Ausführungsbeispiel weist die zweite Anschlagfläche 20a in der Abwandlung in eine Richtung normal zu der von der Längsachse z und der Querachse y aufgespannten Ebene eine kleinere Abmessung auf, wie es in Fig. 3c mit x'' angegeben ist. Die am Fortsatz 7 des Schneideinsatzes 6 ausgebildete Planfläche 7a ist dementsprechend der zweiten Anschlagfläche 20a angepaßt, wie es aus den Figuren 6b und 7b ersichtlich ist. Durch diese Maßnahme läßt sich der technische Aufwand im Zusammenhang mit der Präzisionsbearbeitung der jeweiligen Flächenabschnitte im Eckbereich an der Schnittlinie der zweiten Anschlagfläche 20a mit der Vertiefungsseitenfläche 20b deutlich verringern, ohne dabei die zweite Anschlagfläche 20a wesentlich zu verringern. Selbst wenn die Querschnittsfläche der Vertiefung 20 oder die Querschnittsflächen der Spannuten 24a, 24b so gewählt sind, daß ein Zugang in die Vertiefung 20 über die Spannut 24b parallel zur Querachse 24 nicht mehr möglich ist, kann die zweite Anschlagfläche 20a in diesem Fall dennoch problemlos und mit hoher Genauigkeit angefertigt werden, da die bei Einführung beispielsweise eines Fräswerkzeugs parallel zur Längsachse z im allgemeinen Schwierigkeiten bereitenden Flächenabschnitte im Eckbereich an der Schnittlinie der zweiten Anschlagfläche 20a mit der Vertiefungsseitenfläche 20c nicht präzise bearbeitet werden muß.

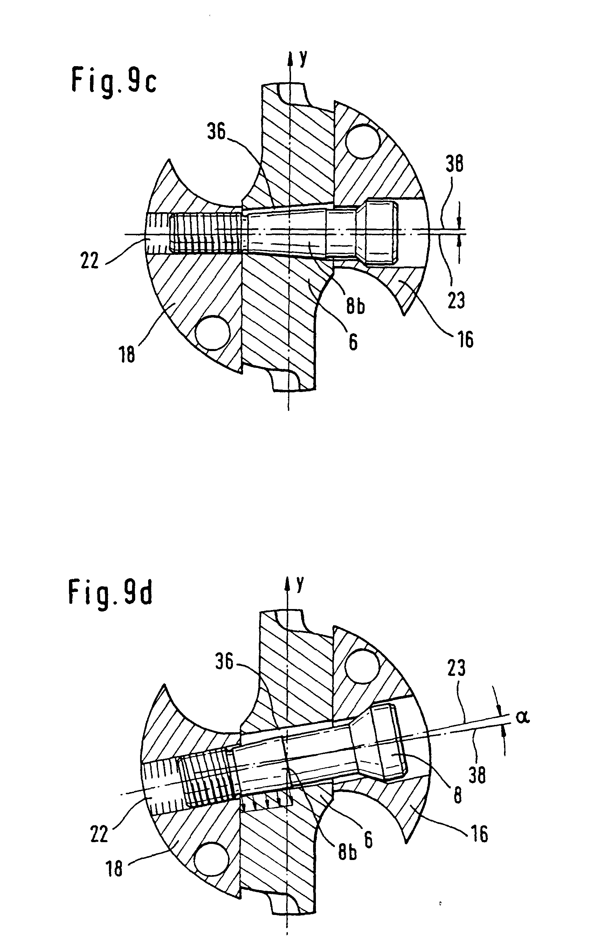

Die Figuren 9b und 9c zeigen weitere Abwandlungen in Bezug auf die Ausgestaltung der Aufnahmebohrung 36 im Schneideinsatz 6 bzw. in Bezug auf die Ausrichtung der Mittelachse 38 der Aufnahmebohrung 36 im Schneideinsatz 6 und der Mittelachse 23 der Bohrung 22 in den beiden Nutschenkeln 16, 18 zueinander.

Während in dem vorstehend beschriebenen Ausführungsbeispiel gemäß der Darstellung in den Figuren 8b und 9a die rotationssymmetrische Außenumfangsfläche des Schaftabschnitts 8b der Klemmschraube 8 wie auch die Innenumfangsfläche der Aufnahmebohrung 36 konisch ausgebildet sind, ist gemäß der Darstellung in Fig. 9b nur die Außenumfangsfläche des Schaftabschnitts 8b der Klemmschraube 8 konisch ausgebildet. Die Innenumfangsfläche der Aufnahmebohrung 36 im Schneideinsatz 6 ist dagegen als eine zylindrische Durchgangsbohrung ausgebildet. Die Mittelachse 38 der Aufnahmebohrung 36 im Schneideinsatz 6 schneidet daher, bei einer Betrachtung in Richtung der Längsaches z, die Mittelachse 23 der sich durch die beiden Nutschenkel 16, 18 hindurch erstreckenden Bohrung 22 unter einem spitzen Winkel α. Die Mittelachse 38 der Aufnahmebohrung 36 im Schneideinsatz 6 und die Mittelachse 23 der sich durch die beiden Nutschenkel 16, 18 hindurch erstreckenden Bohrung 22 liegen jedoch wie im vorstehenden Ausführungsbeispiel jeweils in einer von zwei, in Richtung der Längsachse z beabstandet angeordneten, parallelen Ebenen.

Eine weitere Abwandlung soll an der Darstellung in Fig. 9c deutlich gemacht werden. In diesem Fall ist die Mittelachse 38 der Aufnahmebohrung 36 im Schneideinsatz 6 gegenüber der Mittelachse 23 der sich durch die beiden Nutschenkel 16, 18 hindurch erstreckenden Bohrung 22 sowohl in Richtung der Querachse y als auch in Richtung der Längsachse z parallel versetzt angeordnet. Im Unterschied zum vorstehend beschriebenen Ausführungsbeispiel, in dem die Mittelachsen 23 und 38 der Bohrung 22 bzw. der Aufnahmebohrung 36 unter einem Winkel α auf der von der Längsachse z und der Querachse y aufgespannten Ebene stehen, wie es in Fig. 3b gezeigt ist, bildet in der aktuellen Abwandlung die von der Längsachse z und der Querachse y aufgespannte Ebene eine Normalebene in Bezug auf die Mittelachsen 23 und 38 der Bohrung 22 bzw. der Aufnahmebohrung 36, wie es aus der Darstellung in Fig. 9c ersichtlich ist. In diesem Fall liegt der Klemmschlitz 34 zweckmäßigerweise in der von der Längsachse z und der Querachse y aufgespannten Ebene liegen bzw. parallel dazu.

Um die aus der Druckkraftverteilung an der Innenumfangsfläche der Aufnahmebohrung 36 im Schneideinsatz 6 resultierende Druckkraftwirkungslinie mehr zu den ersten und zweiten Anschlagflächen 14c und 20a hin zu verlagern, ist es vorteilhaft, den Schaftabschnitt 8b der Klemmschraube 8 in zwei Bereiche zu teilen, wobei der an den Kopfabschnitt 8a anschließende Bereich des Schaftabschnitts 8b beispielsweise zylindrisch und der an den Außengewindeabschnitt 8c anschließende Bereich des Schaftabschnitts 8b konisch ausgebildet ist. Durch eine geeignete Abstimmung der Länge des an den Außengewindeabschnitt 8c anschließenden konischen Bereichs des Schaftabschnitts 8b in Richtung der Querachse x auf die Länge der zweite Anschlagfläche 20a in Richtung der Querachse x kann in diesem Fall erreicht werden, daß sich die Druckkraft nur über den Bereich der Innenumfangsfläche der Aufnahmebohrung 36 im Schneideinsatz 6 in Richtung der Querachse x konzentriert, der in Bezug auf die Querachse x auf Höhe der ersten und zweiten Anschlagflächen 14c und 20a liegt. Durch eine derartige Gestaltung der Klemmschraube 8 kann also die Druckkraftwirkungslinie in den Bereich der ersten und zweiten Anschlagflächen 14c und 20a verlagert werden, wodurch der Schneideinsatz 6 im montierten Zustand des Bohrwerkzeugs 2 im wesentlichen drehmomentfrei gegen die ersten und zweiten Anschlagflächen 14c und 20a gepreßt ist. Dies ist in Fig. 9d veranschaulicht.

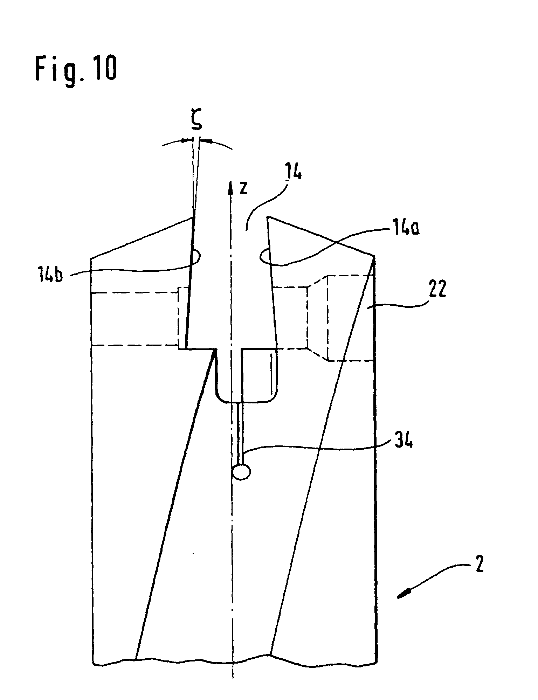

In Fig. 10 ist eine Abwandlung der Bohrwerkzeugspitze des in Fig. 1 dargestellten erfindungsgemäßen Bohrwerkzeugs 2 dargestellt. Die Nut 14 ist hier trapezförmig ausgebildet; d.h., daß die Nutseitenflächen 14a, 14b unter einem Neigungswinkel ζ zur Bohrwerkzeugspitze hin nach innen geneigt sind. Ferner ist auch hier der Klemmschlitz 34 und die Bohrung 22 zur Aufnahme der Klemmschraube 8 erkennbar. Zur Vereinfachung der Herstellung wird man den Neigungswinkel ζ der Nutseitenflächen 14a, 14b nach Positiv und den Neigungswinkel der nicht dargestellten korrespondierenden Seitenflächen 6a, 6b des Schneideinsatzes 6 nach Negativ tolerieren. Je nach Ausgestaltung kann der Neigungswinkel ζ zwischen 0° und 5° betragen, vorzugsweise wird ein Neigungswinkel ζ von 1,5° gewählt. Die Abwandlung des Querschnitts der Nut 14 von einem rechteckigen Profil zu einem trapezförmigen Profil macht natürlich nur dann Sinn, wenn Schneideinsatz 6 und Nut 14 bzw. Vertiefung 20 größenmäßig so aufeinander abgestimmt sind, daß sich der Schneideinsatz 6 parallel zur Längsachse z oder parallel zur Querachse y einführen läßt. In diesem Fall kann durch die trapezförmige Profilgebung der Nut 14 bei gleichzeitig analog modifiziertem Schneideinsatz 6 eine Erleichterung der Montage des Bohrwerkzeuges und damit eine Reduzierung der Herstellungskosten ermöglichen, da der Schneideinsatz 6 nach dessen Einfügen im montierten Zustand des Bohrwerkzeugs 2 durch das trapezförmige Nutprofil gegen Herausfallen gesichert ist.

Das erfindungsgemäße Bohrwerkzeug 2 mit einem gegen Loslösen gesicherten, auswechselbaren Schneideinsatz 6 ist fertigungstechnisch einfach herzustellen. Dabei schwächt der Schneideinsatz 6 die Bohrwerkzeugspitze des Halters 4 weniger als bei bisher bekannten Bohrwerkzeugbauformen, weshalb dieser mithin stabiler ist. Ein Wechsel des Schneideinsatzes 6 ist schnell und einfach zu bewerkstelligen.

Als Werkstoffe für den Schneideinsatz können neben Hartmetall auch Keramik- und Cermet-Werkstoffe Anwendung finden. Die Schneidenplatte kann als geschliffene oder auch lediglich als gesinterte und damit preisgünstigere Platte ausgeführt sein. Das Anwendungsgebiet liegt bei Bohrungstiefen bis zum 10-fachen des Bohrungsdurchmessers.

Wie die vorstehende Beschreibung zeigt, sind vielfache Abwandlungen bzw. Abänderungen der dargestellten Ausführungsform möglich, ohne den Rahmen der Erfindung zu verlassen.

Selbstverständlich sind verschiedene Kombinationen der Merkmale des vorstehend beschriebenen Ausführungsbeispiels und der Merkmale der Abwandlungen möglich, sofern dies technisch durchführbar sind und zweckmäßig erscheinen.

Die Erfindung schafft somit ein Bohrwerkzeug mit einem sich in Richtung einer Längsachse erstreckenden Halter, der einen Schaftabschnitt und einen Kopfabschnitt aufweist, in dem eine orthogonal zur Längsachse, in Richtung einer Querachse verlaufende Nut ausgebildet ist, einem in der Nut eingesetzten Schneideinsatz und einem Klemmelement, das eine im Schneideinsatz ausgebildete Aufnahmebohrung und eine in wenigstens einem der Nutschenkel ausgebildete Bohrung durchsetzt und den Schneideinsatz gegen den wenigstens einen Nutschenkel klemmt. Die Mittelachse der Bohrung in dem wenigstens einen Nutschenkel ist gegenüber der Mittelachse der Aufnahmebohrung im Schneideinsatz versetzt ist. Das Klemmelement und der Schneideinsatz bilden eine Gruppe von Bauteilen, aus der ein Bauteil über eine Schrägfläche mit dem anderen Bauteil in der Art und Weise eines Keilflächengetriebes in der Weise zusammenwirkt, daß der Schneideinsatz im montierten Zustand des Bohrwerkzeugs in Richtung der Längsachse gegen eine erste Anschlagfläche und in Richtung der Querachse gegen eine zweite Anschlagfläche gepreßt ist. Das erfindungsgemäße Bohrwerkzeug zeichnet sich dadurch aus, daß der Schneideinsatz einen sich in Richtung der Längsachse erstreckenden Fortsatz aufweist, der sich in eine von der Nutgrundfläche aus in Richtung der Längsachse zum Schaftabschnitt hin ausgebildete Vertiefung erstreckt, in der die zweite Anschlagfläche vorgesehen ist.

## Patentansprüche

1. Bohrwerkzeug (2) mit:
einem sich in Richtung einer Längsachse (z)
erstreckenden Halter (4), der einen Schaftabschnitt (10) und einen Kopfabschnitt (12) aufweist, in dem eine orthogonal zur Längsachse (z), in Richtung einer Querachse (y) verlaufende Nut (14) ausgebildet ist, einem in der Nut (14) eingesetzten Schneideinsatz (6) und
einem Klemmelement (8), das eine im Schheideinsatz (6) ausgebildete Aufnahmebohrung (36) und eine in wenigstens einem der Nutschenkel (16, 18) ausgebildete Bohrung (22) durchsetzt und den Schneideinsatz (6) gegen den wenigstens einen Nutschenkel (16, 18) klemmt,
wobei die Mittelachse (23) der Bohrung (22) in dem wenigstens einen Nutschenkel (16, 18) gegenüber der Mittelachse (38) der Aufnahmebohrung (36) im Schneideinsatz (6) versetzt ist, und
wobei das Klemmelement (8) und der Schneideinsatz (6) eine Gruppe von Bauteilen bilden, aus der ein Bauteil über eine Schrägfläche mit dem anderen Bauteil in der Art und Weise eines Keilflächengetriebes in der Weise zusammenwirkt, daß der Schneideinsatz (6) im montierten Zustand des Bohrwerkzeugs (2) in Richtung der Längsachse (z) gegen eine erste Anschlagfläche (14c) und in Richtung der Querachse (y) gegen eine zweite Anschlagfläche (20a) gepreßt ist,
**dadurch gekennzeichnet, daß**
der Schneideinsatz (6) einen sich in Richtung der Längsachse (z) erstreckenden Fortsatz (7) aufweist, der sich in eine von der Nutgrundfläche (14c) aus in Richtung der Längsachse (z) zum Schaftabschnitt (10) hin ausgebildete Vertiefung (20) erstreckt, in der die zweite Anschlagfläche (20a) vorgesehen ist, und
die zweite Anschlagfläche (20a) sowie eine an der zweiten Anschlagfläche (20a) anliegende Seitenfläche (7a) am Fortsatz (7) des Schneideinsatzes (6) als Planflächen oder in Bezug auf die Längsachse (z) parallele gekrümmte Flächen, wie z.B. Zylinderflächen, ausgebildet sind.

2. Bohrwerkzeug nach Anspruch 1, **dadurch gekennzeichnet, daß** die Nutgrundfläche (14c) die erste Anschlagfläche (14c) bildet, und diese sowie die an der Nutgrundfläche (14c) anliegende Seitenfläche (6c) des Schneideinsatzes (6) als zur Längsachse (z) senkrecht stehende Planflächen ausgebildet sind.

3. Bohrwerkzeug nach Anspruch 1 oder 2, **dadurch gekennzeichnet, daß** die Mittelachse (38) der Aufnahmebohrung (36) im Schneideinsatz (6) in Richtung der Längsachse (z) und in Richtung der Querachse (y) versetzt ist und daß die zweite Anschlagfläche (20a) sowie die an der zweiten Anschlagfläche (20a) anliegende Seitenfläche (7a) am Fortsatz (7) des Schneideinsatzes (6) als zur Querachse (y) senkrecht stehende Planflächen ausgebildet sind.

4. Bohrwerkzeug nach einem der Ansprüche 1 bis 3, **gekennzeichnet durch** wenigstens eine sich wendelförmig am Außenumfang des Halters (4) erstreckende Spannut (22, 24), die im Bereich einer der Spanflächen (33a, 33b) des Schneideinsatzes (6) ausläuft und bündig in diese übergeht.

5. Bohrwerkzeug nach einem der Ansprüche 1 bis 4, **dadurch gekennzeichnet, daß** das Klemmelement (8) als ein rotationssymmetrischer Körper ausgebildet ist.

6. Bohrwerkzeug nach Anspruch 5, **dadurch gekennzeichnet, daß** das Klemmelement (8) als Klemmschraube mit einem Kopfabschnitt (8a), einem Schaftabschnitt (8b) und einem Außengewindeabschnitt (8c) ausgestaltet ist, wobei im montierten Zustand der Kopfabschnitt (8a) in einem ihm angepaßten Bohrungsabschnitt (22a) der Bohrung (22) in dem einen Nutschenkel (16) angeordnet ist, der Schaftabschnitt (8b) durch die Aufnahmebohrung (36) im Schneideinsatz (6) geht und der Außengewindeabschnitt (8c) in einem mit einem Innengewinde versehenen Bohrungsabschnitt (22b) der Bohrung (22) in dem anderen Nutschenkel (18) eingreift.

7. Bohrwerkzeug nach Anspruch 5 oder 6, **dadurch gekennzeichnet, daß** die Mittelachse (38) der Aufnahmebohrung (36) im Schneideinsatz (6) gegenüber der Mittelachse (23) der sich durch beide Nutschenkel (16, 18) hindurch erstreckenden Bohrung (22) in Richtung der Längsachse (z) und in Richtung der Querachse (y) parallel versetzt angeordnet ist.

8. Bohrwerkzeug nach Anspruch 5 oder 6, **dadurch gekennzeichnet, daß** die Mittelachse (38) der Aufnahmebohrung (36) im Schneideinsatz (6) und die Mittelachse (23) der sich durch beide Nutschenkel (16, 18) hindurch erstreckenden Bohrung (22) jeweils in einer von zwei, in Richtung der Längsachse (z) beabstandet angeordneten, parallelen Ebenen liegen, wobei die Mittelachse (38) der Aufnahmebohrung (36) im Schneideinsatz (6), in Richtung der Längsachse (z) betrachtet, die Mittelachse (23) der sich durch beide Nutschenkel, (16, 18) hindurch erstreckenden Bohrung (22) unter einem Winkel (α) schneidet.

9. Bohrwerkzeug nach einem der Ansprüche 6 bis 8, **dadurch gekennzeichnet, daß** die Aufnahmebohrung (38) im Schneideinsatz (6) und/oder die Klemmschraube (8) wenigstens abschnittsweise konisch ausgebildet sind/ist.

10. Bohrwerkzeug nach einem der Ansprüche 6 bis 9, **dadurch gekennzeichnet, daß** die Mittelachse (23) der sich durch beide Mutschenkel (16, 18) hindurch erstreckenden Bohrung (22) die Längsachse (z) kreuzt.

11. Bohrwerkzeug nach einem der Ansprüche 5 bis 10, **dadurch gekennzeichnet, daß** unterhalb der Nutgrundfläche (14c) ein sich in Längsrichtung (z) zum Schaftabschnitt (10) hin erstreckender Klemmschlitz (34) ausgebildet ist, der in einer Ebene liegt, die unter einem Winkel (β), der zwischen 0° und 30°, vorzugsweise 10°, beträgt, gegenüber der von der Querachse (y) und der Längsachse (z) aufgespannten Ebene verdreht ist, und daß die Mittelachse (23) der sich durch beide Nutschenkel (16, 18) hindurch erstreckenden Bohrung (22) normal auf der Ebene des Klemmschlitzes (34) steht.

12. Bohrwerkzeug nach Anspruch 11, **dadurch gekennzeichnet, daß** das Verhältnis zwischen dem Durchmesser (D) des Bohrwerkzeugs (2) und der Tiefe (t) des Klemmschlitzes (34) in Richtung der Längsachse (z) zwischen 2,5 und 6, vorzugsweise bei etwa 4, liegt.

13. Bohrwerkzeug nach einem der Ansprüche 1 bis 12, **dadurch gekennzeichnet, daß** die Nut (14) im Querschnitt ein trapezförmiges Profil aufweist, wobei die Seitenflächen (14a, 14b) der Nut (14) unter einem Neigungswinkel (ζ) von 0° bis 5°, vorzugsweise von 1,5°, gegenüber der von der Längsachse (z) und der Querachse (y) aufgespannten Ebene geneigt sind.

14. Bohrwerkzeug nach einem der Ansprüche 1 bis 13, **dadurch gekennzeichnet, daß** im Halter (4) wenigstens ein im wesentlichen in Richtung der Längsachse (z) verlaufender, am Kopfabschnitt (12) des Halters (4) austretender Kühlmittelkanal (40) ausgebildet ist.

15. Bohrwerkzeug nach Anspruch 14, **dadurch gekennzeichnet, daß** der Kühlmittelkanal (40) sich in dem in der Nähe des Kopfabschnitts (12) des Halters (4) liegenden Bereich in zwei Teilkanäle (40a, 40b) teilt, die jeweils an einer der Stirnflächen der Nutschenkel (16, 18) austreten.

## Claims

1. A boring tool (2) with:
a holder (4) which extends in the direction of a longitudinal axis (z) and which has a shank portion (10) and a head portion (12), in which there is formed a groove (14) running in the direction of a transverse axis (y) orthogonal to the longitudinal axis (z),
a cutting insert (6) inserted in the groove (14) and a clamping element (8), which passes through a receiving bore (36) formed in the cutting insert (6) and a bore (22) formed in at least one of the groove branches (16, 18), and which clamps the cutting insert (6) against the at least one groove branch (16, 18),
wherein the central axis (23) of the bore (22) in the at least one groove branch (16, 18) is offset relative to the central axis (38) of the receiving bore (36) in the cutting insert (6), and
wherein the clamping element (8) and the cutting insert (6) form a group of components, one component of which cooperates via an inclined face with the other component in the manner of a wedge-face mechanism in such a way that the cutting insert (6) in assembled condition of the boring tool (2) is pressed in the direction of the longitudinal axis (z) against a first stop face (14c) and in the direction of the transverse axis (y) against a second stop face (20a),
**characterized in that**
the cutting insert (6) is provided with an extension (7) which runs in the direction of the longitudinal axis (z) and which reaches into a recess (20) which extends from the groove base face (14c) in the direction of the longitudinal axis (z) to the shank portion (10), and in which there is provided the second stop face (20a), and
the second stop face (20a) as well as a side face (7a) on the extension (7) of the cutting insert (6) bearing against the second stop face (20a) are formed as plane faces or as curved faces, such as cylindrical faces, which are parallel relative to the longitudinal axis (z).

2. A boring tool according to claim 1, **characterized in that** the groove base face (14c) forms the first stop face (14c), and this as well as the side face (6c) of the cutting insert (6) bearing against the groove base face (14c) are formed as plane faces oriented perpendicular to the longitudinal axis (z).

3. A boring tool according to claim 1 or 2,
**characterized in that** the central axis (38) of the receiving bore (36) in the cutting insert (6) is offset in the direction of the longitudinal axis (z) and in the direction of the transverse axis (y), and **in that** the second stop face (20a) as well as the side face (7a) on the projection (7) of the cutting insert (6) bearing against the second stop face (20a) are formed as plane faces oriented perpendicular to the transverse axis (y).

4. A boring tool according to one of claims 1 to 3,
**characterized by** at least one flute (22, 24) which extends helically at the external circumference of the holder (4) and which tapers out in the region of one of the tool faces (33a, 33b) of the cutting insert (6) and merges flush thereinto.

5. A boring tool according to one of claims 1 to 4,
**characterized in that** the clamping element (8) is formed as a rotationally symmetric member.

6. A boring tool according to claim 5, **characterized in that** the clamping element (8) is configured as a clamping bolt with a head portion (8a), with a shank portion (8b) and with an externally threaded portion (8c), wherein in assembled condition the head portion (8a) is disposed in a bore portion (22a) adapted to it, of the bore (22) in the one groove branch (16), the shank portion (8b) passes through the receiving bore (36) in the cutting insert (6) and the externally threaded portion (8c) engages in an internally threaded bore portion (22b) of the bore (22) in the other groove branch (18).

7. A boring tool according to claim 5 or 6,
**characterized in that** the central axis (38) of the receiving bore (36) in the cutting insert (6) is offset, relative to the central axis (23) of the bore (22) extending through both groove branches (16, 18), in a manner parallel to the direction of the longitudinal axis (z) and to the direction of the transverse axis (y).

8. A boring tool according to claim 5 or 6,
**characterized in that** the central axis (38) of the receiving bore (36) in the cutting insert (6) and the central axis (23) of the bore (22) extending through both groove branches (16, 18) each lie in one of two parallel planes disposed spaced apart in the direction of the longitudinal axis (z), wherein the central axis (38) of the receiving bore (36) in the cutting insert (6), viewed in the direction of the longitudinal axis (z), intersects the central axis (23) of the bore (22) extending through both groove branches (16, 18), at an angle (α).

9. A boring tool according to one of claims 6 to 8,
**characterized in that** at least portions of the receiving bore (38) in the cutting insert (6) and/or of the clamping bolt (8) have conical structure.

10. A boring tool according to one of claims 6 to 9,
**characterized in that** the central axis (23) of the bore (22) extending through both groove branches (16, 18) intersects the longitudinal axis (z).

11. A boring tool according to one of claims 5 to 10,
**characterized in that** there is formed below the recess base face (14c), a clamping slit (34) extending in longitudinal direction (z) to the shank portion (10), which slit lies in a plane, which is turned by an angle (β) of between 0° and 30°, preferably 10°, relative to the plane defined by the transverse axis (y) and the longitudinal axis (z), and **in that** the central axis (23) of the bore (22) extending through both groove branches (16, 18) is oriented normal to the plane of the clamping slit (34).

12. A boring tool according to claim 11, **characterized in that** the ratio of the diameter (D) of the boring tool (2) to the depth (t) of the clamping slit (34) in the direction of the longitudinal axis (z) ranges between 2.5 and 6, and is preferably about 4.

13. A boring tool according to one of claims 1 to 12,
**characterized in that** the groove (14) has in cross section a trapezoidal profile, wherein the side faces (14a, 14b) of the groove (14) are inclined at an inclination angle (ζ) of 0° to 5°, preferably 1 - 5°, relative to the plane defined by the longitudinal axis (z) and the transverse axis (y).

14. A boring tool according to one of claims 1 to 13,
**characterized in that** there is formed in the holder (4) at least one coolant channel (40), which runs substantially in the direction of the longitudinal axis (z) and emerges at the head portion (12) of the holder (4).

15. A boring tool according to claim 14, **characterized in that**, in the region disposed in the vicinity of the head portion (12) of the holder (4), the coolant channel (40) splits into two secondary channels (40a, 40b), each of which emerges at one of the end faces of the groove branches (16, 18).

## Revendications

1. Outil de perçage (2) comprenant un support (4) qui s'étend dans la direction d'un axe longitudinal (z) et présente un tronçon de tige (10) et un tronçon de tête (12), dans lequel est formée une rainure (14) s'étendant perpendiculairement à l'axe longitudinal (z), dans la direction d'un axe transversal (y), une pièce de coupe (6) insérée dans la rainure (14) et un élément de serrage (8) qui traverse un trou de positionnement (36) formé dans la pièce de coupe (6) et un orifice (22) formé dans au moins un des côtés de la rainure (16, 18) et qui serre la pièce de coupe (6) contre au moins un côté de rainure (16, 18), l'axe médian (23) du trou (22) formé dans au moins un côté de rainure (16, 18), étant décalé par rapport à l'axe médian (38) du trou de positionnement (36) se trouvant dans la pièce de coupe (6), et l'élément de serrage (8) et la pièce de coupe (6) formant un groupe d'éléments dont un élément coopère, par l'intermédiaire d'une surface inclinée, avec l'autre pièce à la manière d'un engrenage à surfaces trapézoïdales, de telle façon que la pièce de coupe (6) est comprimée, lorsque l'outil de perçage (2) est monté, dans la direction de l'axe longitudinal (2) contre une première surface de butée (14c) et dans la direction de l'axe transversal (y) contre une deuxième surface de butée (20a), **caractérisé en ce que** la pièce de coupe (6) présente un prolongement (7) qui s'étend dans la direction de l'axe longitudinal (z), dans une cavité (20) formée à partir de la surface du fond de la rainure (14c) dans la direction de l'axe longitudinal (z) vers le tronçon de tige (10), dans laquelle la deuxième surface de butée (20a) est prévue, et **en ce que** la deuxième surface de butée (20a), ainsi qu'une surface latérale (7a) adjacente à la deuxième surface de butée (20a) sur le prolongement (7) de la pièce de coupe (6), sont formées comme des surfaces planes ou des surfaces courbes parallèles par rapport à l'axe longitudinal (z), comme des surfaces cylindriques par exemple.

2. Outil de perçage selon la revendication 1, **caractérisé en ce que** la surface de fond de rainure (14c) forme la première surface de butée (14c) et celle-ci, ainsi que la surface latérale (6c) de la pièce de coupe (6) adjacente à la surface de fond de rainure (14c), sont formées comme des surfaces planes perpendiculaires à l'axe longitudinal (z) .

3. Outil de perçage selon la revendication 1 ou 2, **caractérisé en ce que** l'axe médian (38) du trou de positionnement (36) dans la pièce de coupe (6) est décalé dans la direction de l'axe longitudinal (z) et dans la direction de l'axe transversal (y) et **en ce que** la deuxième surface de butée (20a), ainsi que la surface latérale (7a) adjacente à la deuxième surface de butée (20a) sur le prolongement (7) de la pièce de coupe (6), sont formées comme des surfaces planes perpendiculaires à l'axe transversal (y).

4. Outil de perçage selon l'une des revendications 1 à 3, **caractérisé par** au moins une rainure de coupe (22, 24) qui s'étend en hélice sur le pourtour extérieur du support (4), débouche dans la zone d'une des faces de coupe (33a, 33b) de la pièce de coupe (6) et arrive à fleur de celle-ci.

5. Outil de perçage selon l'une des revendications 1 à 4, **caractérisé en ce que** l'élément de serrage (8) est conçu comme un corps à symétrie de révolution.

6. Outil de perçage selon la revendication 5, **caractérisé en ce que** l'élément de serrage (8) est conçu comme une vis de serrage avec un tronçon de tête (8a), un tronçon de tige (8b) et un tronçon fileté extérieurement (8c), le tronçon de tête (8a) étant disposé, dans la position de montage, dans un tronçon d'orifice (22a) qui lui est adapté de l'orifice (22) situé dans un côté de rainure (16), le tronçon de tige (8b) traversant l'orifice de positionnement (36) situé dans la pièce de coupe (6) et le tronçon fileté extérieurement (8c) s'insérant dans le tronçon d'orifice (22b) muni d'un filetage intérieur de l'orifice (22) se trouvant dans l'autre côté de rainure (18).

7. Outil de perçage selon la revendication 5 ou la revendication 6, **caractérisé en ce que** l'axe médian (38) de l'orifice de positionnement (36) dans la pièce de coupe (6) est disposé décalé parallèlement, dans la direction de l'axe longitudinal (z) et dans la direction de l'axe transversal (y), par rapport à l'axe médian (23) de l'orifice (22) s'étendant à travers les deux côtés de rainure (16, 18).

8. Outil de perçage selon la revendication 5 ou la revendication 6, **caractérisé en ce que** l'axe médian (38) de l'orifice de positionnement (36) se trouvant dans la pièce de coupe (6) et l'axe médian (23) de l'orifice (22) passant à travers les deux ailes de rainure (16, 18) sont situés chacun dans un de deux plans parallèles disposés avec un écart dans la direction de l'axe longitudinal (z), l'axe médian (38) de l'orifice de positionnement (36) situé dans la pièce de coupe (6) coupant l'axe médian (23) de l'orifice (22) qui s'étend à travers les deux côcés de rainure (16, 18) en formant un angle (α), quand on regarde dans la direction de l'axe longitudinal (2).

9. Outil de perçage selon l'une des revendications 6 à 8, **caractérisé en ce que** l'orifice de positionnement (38) se trouvant dans la pièce de coupe (6) et/ou la vis de serrage (8) est/sont en forme de cône au moins par tronçons.

10. Outil de perçage selon l'une des revendications 6 à 9, **caractérisé en ce que** l'axe médian (23) de l'orifice (22) s'étendant à travers les deux côtés de rainure (16, 18) croise l'axe longitudinal (z).

11. Outil de perçage selon l'une quelconque des revendications 5 à 10, **caractérisé en ce qu'**il est prévu, au-dessous de la surface du fond de rainure (14c), une fente de serrage (34) qui s'étend dans la direction longitudinale (z) vers le tronçon de tige (10), et se situe dans un plan qui est tourné, par rapport au plan formé par l'axe transversal (y) et l'axe longitudinal (z), d'un angle (β) situé entre 0° et 30°, de préférence de 10°, et **en ce que** l'axe médian (23) de l'orifice (22) s'étendant à travers les deux côtés de rainure (16, 18) est perpendiculaire au plan de la fente de serrage (34).

12. Outil de perçage selon la revendication 11, **caractérisé en ce que** le rapport entre le diamètre (D) de l'outil de perçage (2) et la profondeur (t) de la fente de serrage (34) dans la direction de l'axe longitudinal (z) se situe entre 2,5 et 6, de préférence égal à 4.

13. Outil de perçage selon l'une des revendications 1 à 12, **caractérisé en ce que** la rainure (14) présente en coupe transversale un profil en formé de trapèze, les surfaces latérales (14a, 14b) de la rainure (14) étant inclinées, par rapport au plan formé par l'axe longitudinal (z) et l'axe transversal (y), d'un angle d'inclinaison (ζ) de 0° à 5°, de préférence de 1,5°.

14. Outil de perçage selon l'une des revendications 1 à 13, **caractérisé en ce qu'**au moins un canal de fluide de refroidissement (40) est formé dans le support (4), qui s'étend essentiellement dans la direction de l'axe longitudinal (z) et sort au tronçon de tête (12) du support (4).

15. Outil de perçage selon la revendication 14, **caractérisé en ce que** le canal de fluide de refroidissement (40) se divise, dans la zone située à proximité du tronçon de tête (12) du support (4), en deux canaux partiels (40a, 40b), qui sortent chacun sur une des surfaces d'extrémité des côtés de rainure (16, 18).
